(19) **Europäisches Patentamt / European Patent Office / Office européen des brevets**

(11) **EP 4 651 616 A1**

(12) **EUROPEAN PATENT APPLICATION**
published in accordance with Art. 153(4) EPC

(43) Date of publication:
**19.11.2025 Bulletin 2025/47**

(21) Application number: **24753696.4**

(22) Date of filing: **31.01.2024**

(51) International Patent Classification (IPC):
**H04W 74/08** (2024.01)     **H04W 74/04** (2009.01)
**H04W 74/00** (2009.01)     **B64C 39/02** (2023.01)
**H04W 84/06** (2009.01)     **B64U 101/00** (2023.01)

(52) Cooperative Patent Classification (CPC):
**B64C 39/02; H04W 74/00; H04W 74/04;**
**H04W 74/08; H04W 84/06;** B64U 2101/00

(86) International application number:
**PCT/KR2024/095066**

(87) International publication number:
**WO 2024/167375 (15.08.2024 Gazette 2024/33)**

(84) Designated Contracting States:
**AL AT BE BG CH CY CZ DE DK EE ES FI FR GB**
**GR HR HU IE IS IT LI LT LU LV MC ME MK MT NL**
**NO PL PT RO RS SE SI SK SM TR**
Designated Extension States:
**BA**
Designated Validation States:
**GE KH MA MD TN**

(30) Priority: **10.02.2023 KR 20230018319**

(71) Applicant: **Samsung Electronics Co., Ltd.**
**Suwon-si, Gyeonggi-do 16677 (KR)**

(72) Inventors:
• **JUNG, Sangyeob**
  **Suwon-si Gyeonggi-do 16677 (KR)**
• **AGIWAL, Anil**
  **Suwon-si Gyeonggi-do 16677 (KR)**

(74) Representative: **Nederlandsch Octrooibureau**
**P.O. Box 29720**
**2502 LS The Hague (NL)**

(54) **UNMANNED AERIAL VEHICLE IDENTIFICATION AND RANDOM ACCESS RESOURCE MANAGEMENT METHOD AND DEVICE IN WIRELESS COMMUNICATION SYSTEM**

(57)     The present disclosure relates to a 5G or 6G communication system for supporting higher data transmission rates. An unmanned aerial vehicle terminal in a wireless communication system, according to the present disclosure, may comprise a transmission/reception unit and a control unit coupled to the transmission/reception unit. The control unit can receive, from a base station, through an up-tilted beam, an SSB, which includes an MIB and is associated with the unmanned aerial vehicle terminal, and transmit, to the base station, a random access preamble on the basis of the SSB.

FIG.6

**Description**

[Technical Field]

The disclosure relates to a wireless communication system or a mobile communication system. More specifically, the disclosure relates to a method and a device for identifying an unmanned aerial vehicle and managing a random access resource in a wireless communication system.

[Background Art]

5G mobile communication technologies define broad frequency bands to enable high transmission rates and new services, and can be implemented not only in "Sub 6GHz" bands such as 3.5GHz, but also in ultrahigh frequency ("Above 6GHz") bands referred to as mmWave such as 28GHz and 39GHz. In addition, it has been considered to implement 6G mobile communication technologies (referred to as Beyond 5G systems) in terahertz bands (e.g., 95GHz to 3THz bands) in order to accomplish transmission rates fifty times faster than 5G mobile communication technologies and ultra-low latencies one-tenth of 5G mobile communication technologies.

At the beginning of 5G mobile communication technologies, in order to support services and to satisfy performance requirements in connection with enhanced Mobile BroadBand (eMBB), Ultra Reliable & Low Latency Communications (URLLC), and massive Machine-Type Communications (mMTC), there has been ongoing standardization regarding beamforming and massive MIMO for alleviating radio-wave path loss and increasing radio-wave transmission distances in mmWave, numerology (for example, operating multiple subcarrier spacings) for efficiently utilizing mmWave resources and dynamic operation of slot formats, initial access technologies for supporting multi-beam transmission and broadbands, definition and operation of BWP (BandWidth Part), new channel coding methods such as a LDPC (Low Density Parity Check) code for large-capacity data transmission and a polar code for highly reliable transmission of control information, L2 pre-processing, and network slicing for providing a dedicated network customized to a specific service.

Currently, there are ongoing discussions regarding improvement and performance enhancement of initial 5G mobile communication technologies in view of services to be supported by 5G mobile communication technologies, and there has been physical layer standardization regarding technologies such as Vehicle-to-everything (V2X) for aiding driving determination by autonomous vehicles based on information regarding positions and states of vehicles transmitted by the vehicles and for enhancing user convenience, New Radio Unlicensed (NR-U) aimed at system operations conforming to various regulation-related requirements in unlicensed bands, NR UE Power Saving, Non-Terrestrial Network (NTN) which is UE-satellite direct communication for securing coverage in an area in which communication with terrestrial networks is unavailable, and positioning.

Moreover, there has been ongoing standardization in wireless interface architecture/protocol fields regarding technologies such as Industrial Internet of Things (IIoT) for supporting new services through interworking and convergence with other industries, IAB (Integrated Access and Backhaul) for providing a node for network service area expansion by supporting a wireless backhaul link and an access link in an integrated manner, mobility enhancement including conditional handover and DAPS (Dual Active Protocol Stack) handover, and two-step random access for simplifying random access procedures (2-step RACH for NR). There also has been ongoing standardization in system architecture/service fields regarding a 5G baseline architecture (for example, service based architecture or service based interface) for combining Network Functions Virtualization (NFV) and Software-Defined Networking (SDN) technologies, and Mobile Edge Computing (MEC) for receiving services based on UE positions.

If such 5G mobile communication systems are commercialized, connected devices that have been exponentially increasing will be connected to communication networks, and it is accordingly expected that enhanced functions and performances of 5G mobile communication systems and integrated operations of connected devices will be necessary. To this end, new research is scheduled in connection with eXtended Reality (XR) for efficiently supporting Augmented Reality (AR), Virtual Reality (VR), Mixed Reality (MR), etc., 5G performance improvement and complexity reduction by utilizing Artificial Intelligence (AI) and Machine Learning (ML), AI service support, metaverse service support, and drone communication.

Furthermore, such development of 5G mobile communication systems will serve as a basis for developing not only new waveforms for securing coverage in terahertz bands of 6G mobile communication technologies, Full Dimensional MIMO (FD-MIMO), multi-antenna transmission technologies such as array antennas and large-scale antennas, metamaterial-based lenses and antennas for improving coverage of terahertz band signals, high-dimensional space multiplexing technology using Orbital Angular Momentum (OAM), and Reconfigurable Intelligent Surface (RIS), but also full-duplex technology for increasing frequency efficiency of 6G mobile communication technologies and improving system networks, AI-based communication technology for implementing system optimization by utilizing satellites and AI (Artificial Intelligence) from the design stage and internalizing end-to-end AI support functions, and next-generation distributed computing technology for implementing services at levels of complexity exceeding the limit of UE operation capability by utilizing ultra-high-performance communication and computing resources.

[Disclosure of Invention]

[Technical Problem]

In a method according to an embodiment of the disclosure, a bases station may quickly identify an UAV UE. The method according to an embodiment may allocate an associated random access resource to the UAV UE. The method according to an embodiment may separately define SSB sets for terrestrial UEs and SSB sets for flight UEs, and use PRACH resources accordingly.

[Solution to Problem]

In a wireless communication system according to an embodiment, an uncrewed aerial vehicle (UAV) UE may include a transceiver and a controller coupled to the transceiver. The controller may be configured to receive a synchronization signal (SS) block (SSB)/physical broadcast channel (PBCH) block including a master information block (MIB) and associated with the UAV UE from a base station via an uptilted beam, and transmit a random access preamble to the base station based on the SSB.

The random access preamble may be transmitted on a physical random access channel (PRACH) occasion, wherein the PRACH occasion is determined based on a system information block type 1 (SIB1), the SIB1 including information on a first SSB set associated with the UAV UE and information on a second SSB set associated with a UE flying at or below a predetermined altitude.

The SIB1 may include ssb-PositionInBurstUAV information indicating a time domain position in which the first SSB set is transmitted and ssb-PositionInBurst information indicating a time domain position in which the second SSB set is transmitted.

The system information block type 1 (SIB1) received from the base station may include information on FeatureCombinationPreamble including a Feature related to the UAV UE, and the random access preamble may be determined based on FeatureCombinationPreamble.

The controller may be further configured to receive a random access response (RAR) for the random access preamble from the base station, and transmit message 3 including a logical channel identity (LCID) value associated with the UAV UE to the base station based on the random access response.

In the wireless communication system according to an embodiment, the base station may include a transceiver and

a controller coupled to the transceiver, wherein the controller is configured to transmit a synchronization signal (SS) block (SSB)/physical broadcast channel (PBCH) block including a master information block (MIB) and associated with the uncrewed aerial vehicle (UAV) UE to the UAV UE via an uptilted beam, and receive a random access preamble from the UAV UE based on the SSB.

The random access preamble may be transmitted on a physical random access channel (PRACH) occasion, wherein the PRACH occasion is determined based on a system information block type 1 (SIB1), the SIB1 including information on a first SSB set associated with the UAV UE and information on a second SSB set associated with a UE flying at or below a predetermined altitude.

The SIB1 may include ssb-PositionInBurstUAV information indicating a time domain position in which the first SSB set is transmitted and ssb-PositionInBurst information indicating a time domain position in which the second SSB set is transmitted.

The system information block type 1 (SIB1) received from the base station may include information on FeatureCombinationPreamble including a Feature related to the UAV UE, and the random access preamble may be determined based on FeatureCombinationPreamble.

The controller may be further configured to transmit a random access response (RAR) for the random access preamble to the UAV UE, and receive message 3 including a logical channel identity (LCID) value associated with the UAV UE from the UAV UE based on the random access response.

A method performed by an uncrewed aerial vehicle (UAV) UE in a wireless communication system according to an embodiment may include an operation of receiving a synchronization signal (SS) block (SSB)/physical broadcast channel (PBCH) block including a master information block (MIB) and associated with the UAV UE from a base station via an uptilted beam, and an operation of transmitting a random access preamble to the base station based on the SSB.

The random access preamble may be transmitted on a physical random access channel (PRACH) occasion, wherein the PRACH occasion is determined based on a system information block type 1 (SIB1), the SIB1 including information on a first SSB set associated with the UAV UE and information on a second SSB set associated with a UE flying at or below a predetermined altitude.

The SIB1 may include ssb-PositionInBurstUAV information indicating a time domain position in which the first SSB set is transmitted and ssb-PositionInBurst information indicating a time domain position in which the second SSB set is transmitted.

The method performed by the UAV UE in the wireless communication system according to an embodiment may include an operation of transmitting a synchronization signal (SS) block (SSB)/physical broadcast channel (PBCH) block including a master information block (MIB) and associated with the UAV UE to the UAV UE flying above a predetermined altitude via an uptilted beam, and an operation of receiving a random access preamble from the UAV UE based on the SSB.

The random access preamble may be transmitted on a physical random access channel (PRACH) occasion, wherein the PRACH occasion is determined based on a system information block type 1 (SIB1), the SIB1 including information on a first SSB set associated with the UAV UE and information on a second SSB set associated with a UE flying at or below a predetermined altitude.

[Advantageous Effects of Invention]

The disclosure relates to a 5G or 6G communication system for supporting a higher data transmission rate in a wireless communication system or mobile communication system.

Advantageous effects obtainable from the disclosure may not be limited to the above-mentioned effects, and other effects which are not mentioned herein may be clearly understood from the following description by those skilled in the art to which the disclosure pertains.

[Brief Description of Drawings]

FIG. 1 illustrates a structure of an NR system in a wireless communication system according to an embodiment of the disclosure.
FIG. 2 illustrates a radio protocol structure in LTE and NR systems according to an embodiment of the disclosure.
FIG. 3 is a diagram of downlink and uplink channel frame structures when performing beam-based communication in an NR system according to an embodiment of the disclosure.
FIG. 4 is a diagram illustrating a procedure for a UE to perform contention-based random access to a base station according to an embodiment of the disclosure.
FIG. 5 is a diagram illustrating a method for an Uncrewed Aerial Vehicle (UAV) UE and a terrestrial UE to access an uptilted cell and a downtilted cell in a wireless communication system according to an embodiment of the disclosure.
FIG. 6 is a diagram illustrating a method for quickly identifying an uncrewed aerial vehicle (UAV) UE in a wireless communication system according to an embodiment of the disclosure.
FIG. 7 is a diagram illustrating a method for an uncrewed aerial vehicle (UAV) UE to perform a random access procedure with a base station through a preamble for UAV UEs in a wireless communication system according to an embodiment of the disclosure.
FIG. 8 is a diagram illustrating a method in which a base station transmits an SSB used by an uncrewed aerial vehicle (UAV) UE and a terrestrial UE for a PRACH occasion as a separate set, and accordingly the UAV UE performs a random access procedure with the base station in a wireless communication system according to an embodiment of the disclosure.
FIG. 9 is a block diagram illustrating an internal structure of a UE according to an embodiment of the disclosure.
FIG. 10 is a block diagram illustrating a structure of an NR base station according to an embodiment of the disclosure.
FIG. 11 illustrates a structure of a base station according to various embodiments of the disclosure.
FIG. 12 illustrates a structure of a UE according to various embodiments of the disclosure.

[Mode for the Invention]

Hereinafter, embodiments of the disclosure will be described in detail in conjunction with the accompanying drawings. describing the disclosure, a detailed description of known functions or configurations incorporated herein will be omitted when it is determined that the description may make the subject matter of the disclosure unnecessarily unclear. The terms which will be described below are terms defined in consideration of the functions in the disclosure, and may be different according to users, intentions of the users, or customs. Therefore, the definitions of the terms should be made based on the contents throughout the specification. Hereinafter, embodiments of the disclosure will be described with reference to the accompanying drawings.

In the following description, terms for identifying access nodes, terms referring to network entities, terms referring to messages, terms referring to interfaces between network entities, terms referring to various identification information, and the like are illustratively used for the sake of descriptive convenience. Therefore, the disclosure is not limited by the terms as described below, and other terms referring to subjects having equivalent technical meanings may also be used.

In the following description of the disclosure, terms and names defined in in the 3rd generation partnership project long term evolution (3GPP LTE) standards will be used for the sake of descriptive convenience. However, the disclosure is not limited by these terms and names, and may be applied in the same way to systems that conform other standards. In the disclosure, the term "eNB" may be interchangeably used with the term "gNB" for the sake of descriptive convenience. That is, a base station described as "eNB" may refer to "gNB".

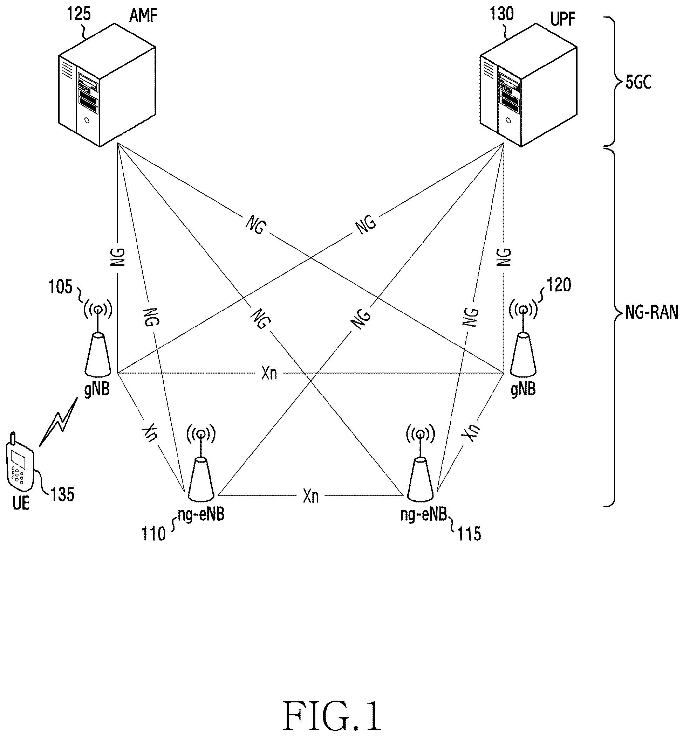

FIG. 1 illustrates a structure of an LTE system in a wireless communication system according to an embodiment of the disclosure. Referring to FIG. 1, the wireless communication system may include at least one base station (for example, a gNB 105, an ng-eNB 110, an ng-eNB 115, or a gNB 120), an access and mobility management function (AMF) 125, and a user plane function (UPF) 130. A user equipment (hereinafter UE or terminal) 135 may access an external network through the base station (for example, the gNB 105, the ng-eNB 110, the ng-eNB 115, or the gNB 120) and the UPF 130.

The base station (for example, the gNB 105, the ng-eNB 110, the ng-eNB 115, or the gNB 120) may provide radio access to UEs that access the network as cellular network access nodes. For example, in order to service users' traffic, the base station 105, 110, 115, or 120 may collect state information, such as the UEs' buffer states, available transmission power states, and channel states, and perform scheduling accordingly, thereby supporting connections between the UEs and the core network (CN; in particular, CN in NR is referred to as "5GC"). A communication system may be divided into a user plane (UP) associated with actual user data transmission and a control plane (CP) such as connection management, and in the drawing, the gNB 105 and gNB 120 may use UP and CP technology defined in the NR technology, and although connected to the 5GC, the ng-eNB 110 and ng-eNB 115 may use UP and CP technology defined in the LTE technology.

The AMF 125 is a device responsible for various control functions as well as a mobility management function for a UE and may be connected to multiple base stations, and the UPF 130 may refer to a type of gateway device for providing data transmission.

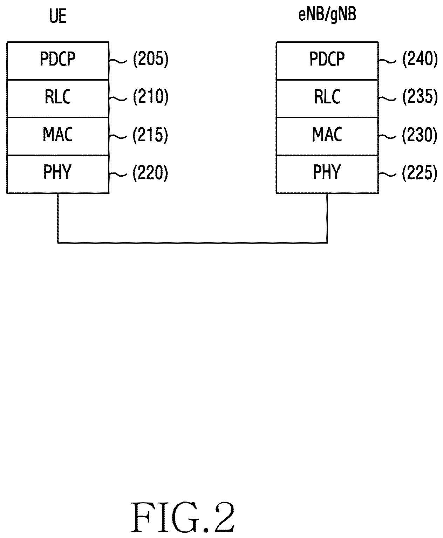

FIG. 2 illustrates a radio protocol structure in LTE and NR systems according to an embodiment of the disclosure.

Referring to FIG. 2, a radio protocol of an LTE system may include a packet data convergence protocol (PDCP) 205, a radio link control (RLC) 210, and a medium access control (MAC) 215 on a UE side. The radio protocol of the LTE system may include a PDCP 240, an RLC 235, and an MAC 230 on an eNB side.

In FIG. 2, the PDCP 205 or 240 may be responsible for operations such as IP header compression or reconstruction, and the RLC 210 or 235 may reconfigure a PDCP PDU into appropriate sizes. The MAC 215 or 230 may be connected to several RLC layer devices configured in a single UE, and perform operations of multiplexing RLC PDUs into an MAC PDU and demultiplexing RLC PDUs from an MAC PDU.

A physical (PHY) layer 220 or 225 may perform channel-coding or modulation of higher layer data. The PHY layer 220 or 225 may generate the higher layer data into OFDM symbols and transmit the same through a radio channel. The PHY layer 220 or 225 may demodulate OFDM symbols received through the radio channel, perform channel-decoding thereof, and deliver the same to the higher layer.

In addition, the PHY layer 220 or 225 may use a hybrid ARQ (HARQ) for additional error correction, and a receiving end may use one bit to transmit whether a packet transmitted by a transmitting end is received. Information transmitted by the receiving end or transmitting end for additional error correction may be referred to as HARQ ACK/NACK information. In the case of LTE, downlink HARQ ACK/NACK information in response to uplink data transmission may be transmitted through a physical hybrid-ARQ indicator channel (PHICH). In the case of NR, whether retransmission is required or new transmission is to be performed may be determined through scheduling information of the UE via a physical dedicated control channel (PDCCH) that is used to transmit downlink/uplink resource allocation or the like. In the case of NR, since asynchronous HARQ is applied, whether retransmission is required or new transmission is to be performed may be determined through the scheduling information of the UE via the PDCCH. Uplink HARQ ACK/NACK information in response to downlink data transmission may be transmitted through a physical uplink control channel (PUCCH) or through a physical uplink shared channel (PUSCH). The PUCCH may be generally transmitted in an uplink of a PCell as described below, and if supported by the UE, may be additionally transmitted to the corresponding UE in a SCell as described below. As used herein, the SCell in which the PDCCH is transmitted may be referred to as a PUCCH SCell

Although not illustrated in the drawing, a radio resource control (RRC) layer may exist as a higher layer than each PDCP layer of the UE and the base station, and the RRC layer may exchange access/measurement-related configuration control messages for radio resource control.

The PHY layer may include one or multiple frequencies/carriers, and a technology for simultaneously configuring and using multiple frequencies is referred to as carrier aggregation (hereinafter CA). The CA technology refers to a technology in which, in contrast to the conventional technology in which only one carrier is used for communication between a UE and a base station (for example, E-UTRAN NodeB or eNB), a primary carrier and at least one secondary carrier are additionally used and thus data capacity can be greatly increased as much as the number of secondary carriers.

In the LTE and NR systems, a cell in a base station, which uses the primary carrier, may be referred to as a primary cell or PCell, and a cell in a base station, which uses the secondary carrier, may be referred to as a secondary cell or SCell.

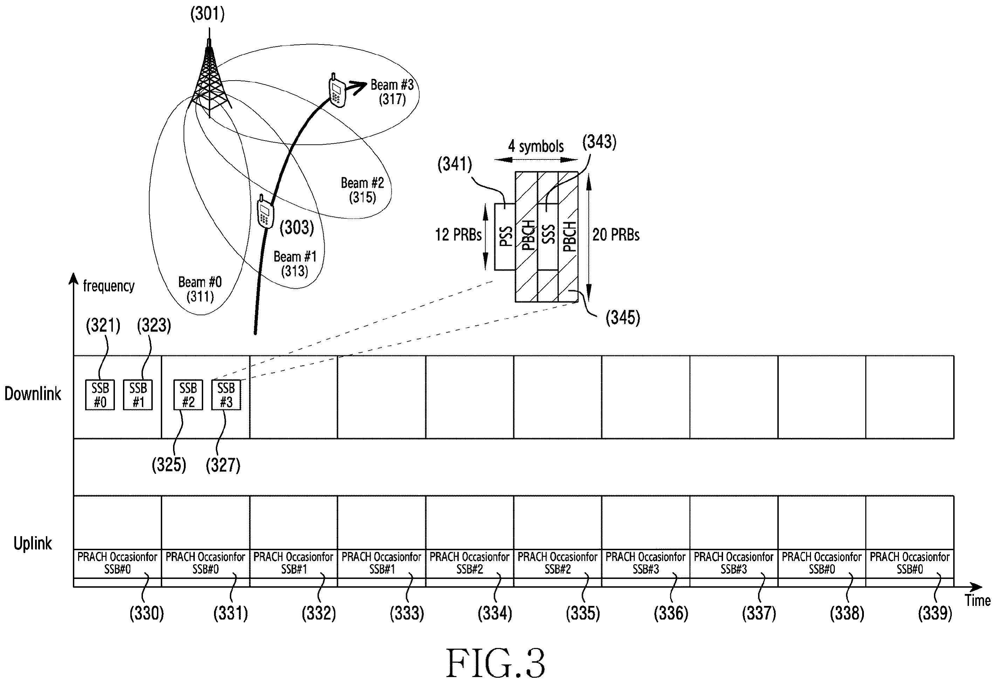

FIG. 3 is a diagram of downlink and uplink channel frame structures when performing beam-based communication in an NR system according to an embodiment of the disclosure.

In FIG. 3, the base station 301 may transmit a signal in the form of a beam (e.g., Beam #0 311, Beam #1 313, Beam #2 315, or Beam #3 317) for a wider coverage or transmitting a stronger signal. Accordingly, a UE 303 within a cell may transmit and receive data using a specific beam (Beam #1 313 in FIG. 3) transmitted by the base station.

Meanwhile, a state of the UE may be divided into an idle mode (RRC_IDLE) state and a connected mode (RRC_CONNECTED) state depending on whether the UE is connected to the base station. In case that the UE is in the idle mode, the base station does not know a location of the UE.

If the UE in the idle mode state wants to transition to the connected mode state, the UE receives a synchronization signal block (SSB) 321, 323, 325, or 327 transmitted by the base station. The SSB is a signal transmitted periodically according to a period configured by the base station, and each SSB may be divided into a primary synchronization signal (PSS) 341, a secondary synchronization signal (SSS) 343, and a physical broadcast channel (PBCH).

In FIG. 3, it is assumed a scenario in which the SSB is transmitted through a beam. For example, in the case of SSB#0 321, it is assumed that Beam #0 311 is used for transmission, in the case of SSB#1 323, it is assumed that Beam #1 313 is used for transmission, in the case of SSB#2 325, it is assumed that Beam #2 315 is used for transmission, and in the case of SSB#3 327, it is assumed that Beam #3 317 is used for transmission. In FIG. 3, it is assumed that the UE in the idle mode is located at Beam #1, but even when the UE in the connected mode performs random access, the UE may select an SSB received at the time point of performing the random access.

In FIG. 3, the UE 303 according to an embodiment may receive SSB #1 transmitted through Beam #1. When SSB #1 is received, the UE 303 may acquire a physical cell identifier (PCI) of the base station 301 through the PSS or SSS. By receiving the PBCH, the UE 303 may identify an identifier of the currently received SSB (i.e., #1) or a location where the current SSB is received within a 10ms frame. By receiving the PBCH, the UE 303 may identify which a system frame number (SFN)it is in within an SFN having a period of 10.24 seconds. In addition, the PBCH may include a master information block (MIB), wherein the MIB may provide a location where a system information block type 1 (SIB1) may be received. The SIB1 may broadcast more detailed cell configuration information. By receiving the SIB1, the UE 303 may know the total number of SSBs transmitted by the base station 301. By receiving the SIB1, the UE 303 may identify a location of a physical random access channel occasion (PRACH occasion). The PRACH occasion may perform random access to transition to the connected mode state. The PRACH occasion may transmit a preamble, which is a physical signal specifically designed for uplink synchronization. In FIG. 3, it is assumed that PRACH occasions (e.g., 330 to 339) are allocated every 1ms.

According to an embodiment, the UE may identify which PRACH occasion among PRACH occasions is mapped to which SSB index, based on the information. For example, in FIG. 3, it is assumed a scenario in which PRACH occasions are allocated every 1ms, and 1/2 SSBs may be allocated to one PRACH occasion (i.e., two PRACH occasions may be allocated to one SSB). Accordingly, a PRACH occasion may start according to an SFN value, and two PRACH occasions may be allocated to each SSB. That is, the PRACH occasion 330 and the PRACH occasion 331 may be allocated for SSB#0, and the PRACH occasion 332 and the PRACH occasion 333 may be allocated for SSB#1. When the configuration for all SSBs is complete, a PRACH occasion may be allocated again for the initial SSB, such as the PRACH occasion 338 or the PRACH occasion 339.

Accordingly, the UE 303 may identify the location of the PRACH occasion 332 or 333 for SSB#1, and accordingly, may transmit a random access preamble to a PRACH occasion among the PRACH occasions 332 and 333 corresponding to SSB#1, which is fastest at a current time point. For example, in case that the PRACH occasion 332 is the fastest at the current time point among the PRACH occasions 332 and 333, the UE 303 transmits a random access preamble to the PRACH occasion 332. Since the preamble is received on the PRACH occasion 332, the base station 301 may identify that the UE 303 has selected SSB#1 corresponding to the PRACH occasion 332 and transmitted the preamble. Accordingly, the base station 301 may transmit and receive data through Beam #1 313 corresponding to SSB#1 when performing subsequent random access.

According to an embodiment, the UE, in the connected state, may perform random access to a target base station when moving from a current (source) base station to the destination (target) base station for reasons such as handover, and may select an SSB and transmit a random access preamble. In the case of a handover, a handover command is transmitted to the UE to move from the source base station to the target base station, and in this case, a message may include a random access preamble identifier dedicated to the UE for each SSB of the target base station, and the included random access preamble identifier may be used when performing random access at the target base station.

Here, the base station may not allocate a dedicated random access preamble identifier to all beams (depending on the current location of the UE, etc.), and thus, some SSBs may not be allocated a dedicated random access preamble. For example, in FIG. 3, the base station 301 may allocate a dedicated random access preamble only to Beam #2 315 and Beam #3 317, and not to Beam #0 311 and Beam #1 313.

If a dedicated random access preamble is not allocated to the SSB selected by the UE for preamble transmission, the UE may randomly select a contention-based random access preamble to perform random access. For example, in FIG. 3, the UE 303 may be initially located at Beam #1 313 to which a dedicated random access preamble is not allocated and fail to perform random access, and then may be located at Beam #3 317 to which a dedicated random access preamble is allocated and perform dedicated preamble transmission.

That is, even within a single random access procedure, when preamble retransmission occurs, one of a contention-based random access procedure or a non-contention-based random access procedure may be performed depending on whether a dedicated random access preamble is allocated to the selected SSB for each preamble transmission.

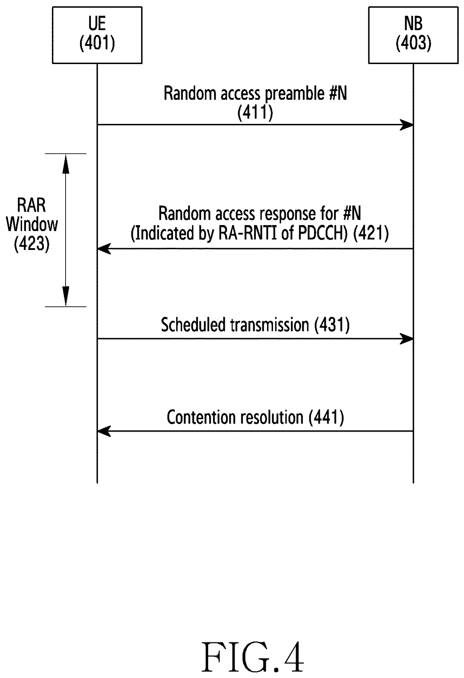

FIG. 4 is a diagram illustrating a procedure for a UE to perform contention-based random access to a base station according to an embodiment of the disclosure.

FIG. 4 illustrates the contention-based random access procedure performed by the UE to the base station for initial connection, reconnection, handover, and other various cases where random access is required.

In operation 411 of FIG. 4, the UE 401 may transmit a random access preamble to the PRACH selected in FIG. 3 for access to the base station 403. There may be some cases in which more than one UE may transmit a random access preamble simultaneously using a PRACH resource. The PRACH resource may be spread across a single subframe, or only some symbols within a subframe may be used. Information on the PRACH resource may be included in system information broadcast by the base station, so that the UE may identify a time-frequency resource to transmit the preamble.

The random access preamble may include one of multiple preamble identifiers (indexes) based on a preconfigured sequence so that the base station may receive the preamble even if the random access preamble is transmitted before the UE is completely synchronized with the base station. The UE may transmit a preamble randomly selected by the UE from among the multiple preamble identifiers, or may transmit a specific preamble designated by the base station.

In operation 421, the base station, in response to receiving the preamble in operation 411, may transmit a random access response (RAR) message to the UE. The RAR message may include at least one of identifier information of the preamble used in operation 411, uplink transmission timing correction information, uplink resource allocation information, and temporary UE identifier information.

Uplink resource allocation information may be used in operation 431. The identifier information of the preamble is transmitted to provide information to indicate a preamble to which the RAR message is a response message if, for example, in operation 411, multiple UEs attempt random access by transmitting different preambles. The uplink resource allocation information is detailed information of a resource to be used by the UE in operation 431, and may include at least one of a physical location and size of the resource, a modulation and coding scheme (MCS) used during transmission, or power adjustment information during transmission.

Temporary UE identifier information may refer to a value transmitted from the base station to the UE for communication with the base station because the UE does not have an identifier allocated by the base station when the UE that transmitted the preamble establishes an initial connection.

The RAR message may start after a predetermined time has elapsed since the preamble has been transmitted. The RAR message is transmitted within a predetermined time period, and this period is called a "RAR window" (e.g., a RAR Window 423). The RAR window may start after a predetermined time has elapsed since a first preamble has been transmitted. The predetermined time may have a subframe unit (1ms) or a smaller value. In addition, the length of the RAR window may be a predetermined value configured corresponding to each PRACH resource or one or more PRACH resource sets in a system information message broadcast by the base station.

When the RAR message is transmitted, the base station may schedule the corresponding RAR message through a PDCCH, and the corresponding scheduling information may be scrambled using a random access-radio network temporary identifier (RA-RNTI). The RA-RNTI may be mapped to the PRACH resource used to transmit the message of operation 411, and the UE that has transmitted the preamble to a specific PRACH resource may attempt to receive a PDCCH based on the RA-RNTI mapped to the specific PRACH resource to determine whether there is a corresponding RAR message.

For example, as shown in FIG. 4, in case that the RAR message is a response to the preamble transmitted by the UE in operation 411, the RA-RNTI used in the RAR message scheduling information may include information on the transmission in operation 411. To this end, the RA-RNTI may be determined based on time resource or frequency resource information on which the preamble is transmitted or the like, and may be calculated, for example, by the following equation.

$$\text{RA-RNTI} = 1 + s\_id + 14 \times t\_id + 14 \times 80 \times f\_id + 14 \times 80 \times 8 \times ul\_carrier\_id$$

Here, s_id is an index corresponding to a first OFDM symbol from which preamble transmission started in operation 411, and may have a value of $0 \leq s\_id < 14$ (i.e., a maximum number of OFDM symbols in one slot). In addition, t_id is an index corresponding to a first slot from which preamble transmission started in operation 411, and may have a value of 0 ≤ t_id < 80 (i.e., a maximum number of slots in one system frame (10ms)).

Here, f_id indicates an order of PRACH at which the preamble transmitted in operation 411 is transmitted in terms of frequency, and may have a value of 0 ≤ f_id < 8 (i.e., a maximum number of PRACHs on frequency within an identical time).

In addition, ul_carrier_id may be a factor to distinguish whether the preamble is transmitted in a normal uplink (NUL) or a supplementary uplink (SUL) when two carriers are used for uplink for one cell. In case that the preamble is transmitted in the normal uplink, ul_carrier_id may have a value of 0, and in case that the preamble is transmitted in the supplementary uplink, ul_carrier_id may have a value of 1.

The UE having received the RAR message may transmit a message to the resource allocated to the RAR message at operation 431. In operation 431, the UE may transmit various messages according to various purposes.

In FIG. 4, the preamble transmitted in operation 411 is referred to as Msg1, the RAR transmitted in operation 421 is referred to as Msg2, and the message transmitted in operation 431 is referred to as Msg3. For example, Msg3 may correspond to an RRCConnectionRequest message, which is an RRC layer message, in case of initial connection. For example, Msg3 may correspond to an RRCConnectionReestablishmentRequest message in case of reconnection. For example, Msg3 may correspond to an RRCConnectionReconfigurationComplete message in case of handover. Msg3 may correspond to a buffer status report (BSR) message for resource request.

In operation 441, the UE may receive a contention resolution message from the base station in case of initial transmission. For example, the UE may receive the contention resolution message from the base station in case that Msg3 does not include base station identifier information previously allocated to the UE.

Since the contention resolution message includes a content transmitted by the UE through Msg3 as is, the contention resolution message may provide information on which UE among multiple UEs the response is for, even when multiple UEs select an identical preamble in operation 411 or 413.

The contention resolution message may start or restart a contention resolution timer (ra-ContentionResolutionTimer) at a time point (e.g., a first OFDM symbol after the corresponding uplink) at which the uplink allocated for Msg3 transmission through the RAR or the PDCCH ends. Accordingly, the UE may attempt to receive Msg4 from the base station until the timer expires, and if Msg4 is not received before the timer expires, the UE may determine that contention resolution has failed and retransmit the preamble.

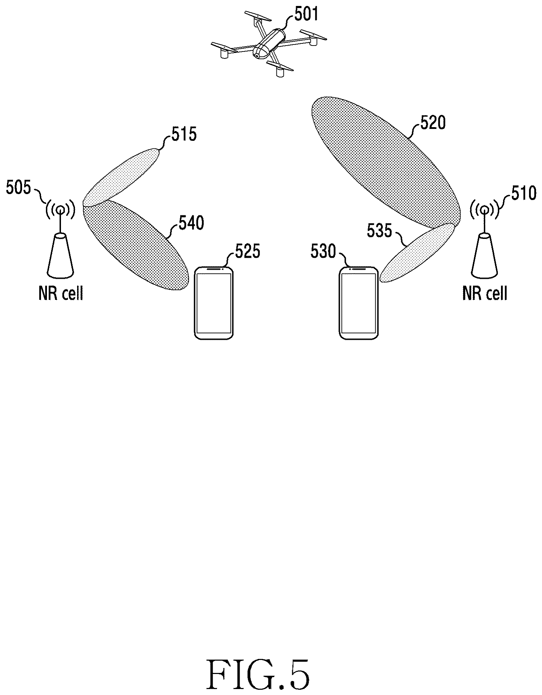

FIG. 5 is a diagram illustrating a method for an Uncrewed Aerial Vehicle (UAV) UE and a terrestrial UE to access an uptilted cell and a downtilted cell in a wireless communication system according to an embodiment of the disclosure.

In FIG. 5, the UAV UE 501 is a UE that may fly in the sky. Therefore, it is highly likely that the UE 501 has a higher line of sight than terrestrial UEs 525 and 530. As a result, the UAV UE 501 may receive downlink (DL) interference from more cells than the terrestrial UEs 525 and 530. The UAV UE 501 may receive a high level of DL interference from more surrounding cells than the terrestrial UE 525 and 530. Similarly, the UAV UE 501 may cause uplink (UL) interference to more cells than the terrestrial UE 525 and 530.

As in 515 or 520 of FIG. 5, the UAV UE 501 may be located above a certain altitude and may receive a signal from an NR cell 505 or 510. Here, the NR cell 510 that has uptilted a beam may allow access to the UAV UE 501, and the NR cell 505 that has downtilted a beam may not allow access to the UAV UE 501. For example, the NR cell 510 may allow or not allow access to the UAV UE 501 through cellBarredUAV in the SIB1. The NR cell 510 that has uptilted the beam may correspond to a dedicated cell operated only for the UAV UE 501.

As in 535 or 540 of FIG. 5, the terrestrial UE 525 or 530 may receive a signal from an NR cell 505 or 510. In this case, the NR cell 505 that has downtilted the beam may allow access of the terrestrial UE 525 or 530, but the NR cell 510 that has uptilted the beam may not allow access to the terrestrial UE 525 or 530. For example, the NR cell 505 or the NR cell 510 may allow or not allow access of the terrestrial UE 525 or 530 through cellBarred in the MIB. That is, the NR cell 510 that has downtilted a beam may correspond to a dedicated cell operated for the terrestrial UE 525 or 530. A terrestrial UE may be a term that includes at least one of a UE located on the ground, a UE located below a specific altitude, or a UAV UE located on the ground or below a specific altitude.

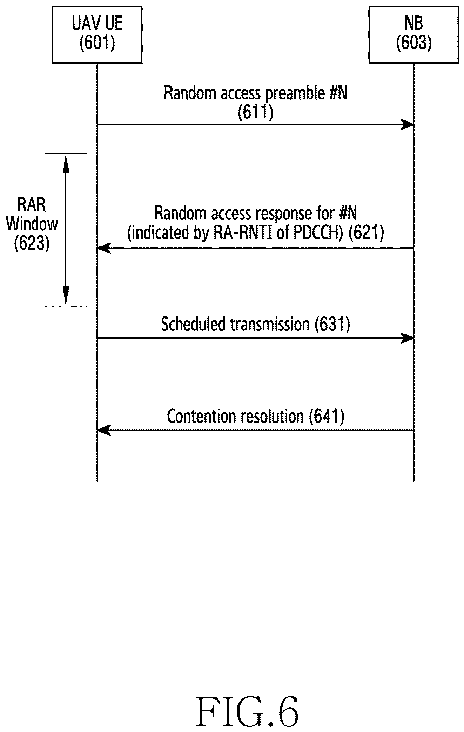

FIG. 6 is a diagram illustrating a method for quickly identifying an uncrewed aerial vehicle (UAV) UE in a wireless communication system according to an embodiment of the disclosure.

Since the UAV UE can fly in the air, it is highly likely that the UAV UE has a higher line of sight than that of the terrestrial UE. As a result, the UAV UE may receive downlink (DL) interference from more cells than the terrestrial UE. In other words, the UAV UE may receive a high level of DL interference from more surrounding cells than the terrestrial UE. Similarly, the UAV UE may cause uplink (UL) interference to more cells than the terrestrial UE.

The disclosure proposes a separate logical channel ID (LCID) dedicated for UAV UEs in a common control channel (CCCH) to quickly identify UAV UEs. Specifically, the disclosure proposes a separate LCID used by UAV UEs in the cases where the size of a CCCH is 48 bits and 65 bits. In case that the size of the CCCH is 48 bits and 65 bits, the base station may identify that the UAV UE is a UAV UE before the UAV UE transitions to the RRC connection mode, and thus the base station may apply random access information optimized for the UAV UE for interference problems caused by the UAV UE.

Referring to FIG. 6, in operation 611, the UAV UE 601 may select a PRACH according to the embodiments described above for connection to the base station 603 and transmit a random access preamble on the corresponding PRACH.

The base station 603, in response to receiving the preamble, transmits a random access response (hereinafter, RAR) message to the UAV UE in operation 621. The RAR message may include at least one of identifier information of the preamble and uplink transmission timing correction information used in operation 611, and uplink resource allocation information and temporary UE identifier information used in a following operation (i.e., operation 631). The identifier information of the preamble may provide information to indicate a preamble to which the RAR message is a response message if, for example, in operation 611, multiple UEs attempt random access by transmitting different preambles. The uplink resource allocation information is detailed information of a resource to be used by the UE in operation 631, and may include at least one of a physical location and size of the resource, a modulation and coding scheme (MCS) used during transmission, and power adjustment information during transmission. The temporary UE identifier information may refer to a value transmitted from the base station to the UE to be used for communication with the base station because the UE does not have an identifier allocated by the base station for communication if the UE that transmitted the preamble establishes an initial connection.

The RAR message needs to be transmitted within a predetermined time period starting from a predetermined time after the preamble is transmitted, and the above time period is called a "RAR window." The RAR window may start after a predetermined time has elapsed since a first preamble has been transmitted. The predetermined time may have a subframe unit (1ms) or a smaller value. In addition, the length of the RAR window may be a predetermined value configured corresponding to each PRACH resource or one or more PRACH resource sets in a system information message broadcast by the base station.

When the RAR message is transmitted, the base station may schedule the corresponding RAR message through a PDCCH, and the corresponding scheduling information may be scrambled using a random access-radio network temporary identifier (RA-RNTI). The RA-RNTI may be mapped to the PRACH resource used to transmit the message of operation 611, and the UE that has transmitted the preamble to a specific PRACH resource may attempt to receive a PDCCH based on the RA-RNTI to determine whether there is a corresponding RAR message. For example, as shown in FIG. 6, in case that the RAR message is a response to the preamble transmitted by the UAV UE in operation 611, the RA-RNTI used in the RAR message scheduling information may include information on the transmission in operation 611. To this end, the RA-RNTI may be determined based on time resource or frequency resource information on which the preamble is transmitted or the like, and may follow the above-described embodiment.

In operation 631, the UAV UE 601 having received the RAR message may transmit various messages for various purposes to the resources allocated to the RAR message. In FIG. 6, the preamble transmitted in operation 611 is referred to as Msg1, the RAR transmitted in operation 621 is referred to as Msg2, and the message transmitted in operation 631 is referred to as Msg3. For example, in case of initial connection, an RRCConnectionRequest message, which is an RRC layer message, may be transmitted as Msg3, and in case of reconnection, an RRCConnectionReestablishmentRequest message may be transmitted as Msg3. For example, in case of handover, an RRCConnectionReconfigurationComplete message may be transmitted as Msg3. Alternatively, a buffer status report (BSR) message for a resource request or the like may be transmitted. When the UAV UE transmits Msg3, an LCID value included in a MAC sub-header according to an embodiment may be configured to a new LCID value used by the UAV UE. That is, the UAV UE may transmit Msg3 by only using the LCID value used in the CCCH of 48-bit and the LCID value used in the CCCH of 64-bit are values defined only for the UAV UE.

In operation 641, the UAV UE 601 may receive a contention resolution message from the base station 603 in case of initial transmission. For example, in case that the base station identifier information previously assigned to the UE is not included in Msg3, the UAV UE 601 may receive a contention resolution message from the base station 603. This may follow the embodiment described above.

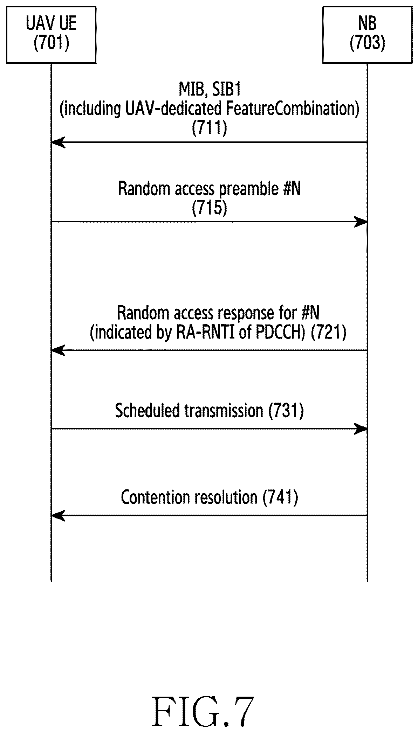

FIG. 7 is a diagram illustrating a method for an uncrewed aerial vehicle (UAV) UE to perform a random access procedure with a base station through a preamble for UAV UEs in a wireless communication system according to an embodiment of the disclosure.

The UAV UE has a characteristic of lower UE density than a terrestrial UE. In addition, the UAV UE has a characteristic of receiving downlink (DL) interference from more cells and causing uplink (UL) interference to more cells than the terrestrial UE. Therefore, the method according to an embodiment of the disclosure may allow allocating associated random access resource to the UAV UE. The UAV UE according to an embodiment may perform a random access procedure with the base station according to the above-described embodiment.

Referring to FIG. 7, in operation 711, the UAV UE 701 may receive a master information block (MIB) and a system information block 1 (SIB1) from the base station 703. The SIB1 may include a RACH-ConfigCommon information element (IE) containing cell-specific random access parameters and a RACH-ConfigCommonTwoStepRA IE containing cell-specific 2-step random access type parameters. Specifically, the information contained in the RACH-ConfigCommon IE and the RACH-ConfigCommonTwoStepRA IE may be as shown in Tables 1 and 2 below.

[Table 1]

```
RACH-ConfigCommon ::=                    SEQUENCE {
    rach-ConfigGeneric                   RACH-ConfigGeneric,
    totalNumberOfRA-Preambles                                INTEGER   (1..63)
OPTIONAL,   -- Need S
    ssb-perRACH-OccasionAndCB-PreamblesPerSSB    CHOICE {
        oneEighth                                            ENUMERATED
{n4,n8,n12,n16,n20,n24,n28,n32,n36,n40,n44,n48,n52,n56,n60,n64},
        oneFourth                                            ENUMERATED
{n4,n8,n12,n16,n20,n24,n28,n32,n36,n40,n44,n48,n52,n56,n60,n64},
        oneHalf                                              ENUMERATED
{n4,n8,n12,n16,n20,n24,n28,n32,n36,n40,n44,n48,n52,n56,n60,n64},
        one                                                  ENUMERATED
{n4,n8,n12,n16,n20,n24,n28,n32,n36,n40,n44,n48,n52,n56,n60,n64},
        two                                                  ENUMERATED
{n4,n8,n12,n16,n20,n24,n28,n32},
        four                          INTEGER (1..16),
```

```
            eight                           INTEGER (1..8),
            sixteen                         INTEGER (1..4)
        }
OPTIONAL,    -- Need M


    groupBconfigured                SEQUENCE {
        ra-Msg3SizeGroupA               ENUMERATED {b56, b144, b208,
b256, b282, b480, b640,

                                            b800,  b1000,  b72,  spare6,
spare5,spare4, spare3, spare2, spare1},
        messagePowerOffsetGroupB        ENUMERATED { minusinfinity, dB0,
dB5, dB8, dB10, dB12, dB15, dB18},
        numberOfRA-PreamblesGroupA      INTEGER (1..64)
    }
OPTIONAL,    -- Need R
    ra-ContentionResolutionTimer    ENUMERATED { sf8, sf16, sf24, sf32,
sf40, sf48, sf56, sf64},
    rsrp-ThresholdSSB                               RSRP-Range
OPTIONAL,    -- Need R
    rsrp-ThresholdSSB-SUL                           RSRP-Range
OPTIONAL,    -- Cond SUL
    prach-RootSequenceIndex         CHOICE {
        l839                            INTEGER (0..837),
        l139                            INTEGER (0..137)
    },
    msg1-SubcarrierSpacing                         SubcarrierSpacing
OPTIONAL,    -- Cond L139
    restrictedSetConfig                 ENUMERATED {unrestrictedSet,
restrictedSetTypeA, restrictedSetTypeB},
    msg3-transformPrecoder              ENUMERATED {enabled}
OPTIONAL,    -- Need R
```

```
...,
[[
ra-PrioritizationForAccessIdentity-r16   SEQUENCE {
     ra-Prioritization-r16                    RA-Prioritization,
     ra-PrioritizationForAI-r16               BIT STRING (SIZE (2))
}
OPTIONAL,    -- Cond InitialBWP-Only
     prach-RootSequenceIndex-r16              CHOICE {
          l571                                INTEGER (0..569),
          l1151                               INTEGER (0..1149)
     }    OPTIONAL    -- Need R
]],
[[
ra-PrioritizationForSlicing-r17                      RA-PrioritizationForSlicing-r17
OPTIONAL,    -- Cond InitialBWP-Only
     featureCombinationPreamblesList-r17                        SEQUENCE
(SIZE(1..maxFeatureCombPreamblesPerRACHResource-r17))                     OF
FeatureCombinationPreambles-r17 OPTIONAL -- Cond AdditionalRACH-AndRedCap
     ]]
}
```

[Table 2]

```
RACH-ConfigCommonTwoStepRA-r16 ::=                      SEQUENCE {
     rach-ConfigGenericTwoStepRA-r16                             RACH-
ConfigGenericTwoStepRA-r16,
     msgA-TotalNumberOfRA-Preambles-r16              INTEGER (1..63)
OPTIONAL, -- Need S
     msgA-SSB-PerRACH-OccasionAndCB-PreamblesPerSSB-r16    CHOICE {
          oneEighth                               ENUMERATED
{n4,n8,n12,n16,n20,n24,n28,n32,n36,n40,n44,n48,n52,n56,n60,n64},
          oneFourth                               ENUMERATED
{n4,n8,n12,n16,n20,n24,n28,n32,n36,n40,n44,n48,n52,n56,n60,n64},
```

```
            oneHalf                                    ENUMERATED
{n4,n8,n12,n16,n20,n24,n28,n32,n36,n40,n44,n48,n52,n56,n60,n64},
            one                                        ENUMERATED
{n4,n8,n12,n16,n20,n24,n28,n32,n36,n40,n44,n48,n52,n56,n60,n64},
            two                                        ENUMERATED
{n4,n8,n12,n16,n20,n24,n28,n32},
        four                                       INTEGER (1..16),
        eight                                      INTEGER (1..8),
        sixteen                                    INTEGER (1..4)
    }
OPTIONAL, -- Cond 2StepOnly
    msgA-CB-PreamblesPerSSB-PerSharedRO-r16            INTEGER  (1..60)
OPTIONAL, -- Cond SharedRO
    msgA-SSB-SharedRO-MaskIndex-r16                    INTEGER  (1..15)
OPTIONAL, -- Need S
    groupB-ConfiguredTwoStepRA-r16                          GroupB-
ConfiguredTwoStepRA-r16                   OPTIONAL, -- Need S
    msgA-PRACH-RootSequenceIndex-r16            CHOICE {
        l839                                    INTEGER (0..837),
        l139                                    INTEGER (0..137),
        l571                                    INTEGER (0..569),
        l1151                                   INTEGER (0..1149)
    }
OPTIONAL, -- Cond 2StepOnly
    msgA-TransMax-r16                          ENUMERATED  {n1, n2,
n4, n6, n8, n10, n20, n50, n100, n200}      OPTIONAL, -- Need R
    msgA-RSRP-Threshold-r16                             RSRP-Range
OPTIONAL, -- Cond 2Step4Step
    msgA-RSRP-ThresholdSSB-r16                          RSRP-Range
OPTIONAL, -- Need R
```

```
        msgA-SubcarrierSpacing-r16                          SubcarrierSpacing
OPTIONAL, -- Cond 2StepOnlyL139
        msgA-RestrictedSetConfig-r16                        ENUMERATED
{unrestrictedSet, restrictedSetTypeA,


restrictedSetTypeB}                          OPTIONAL, -- Cond 2StepOnly
        ra-PrioritizationForAccessIdentityTwoStep-r16    SEQUENCE {
                ra-Prioritization-r16                     RA-Prioritization,
                ra-PrioritizationForAI-r16                BIT STRING (SIZE (2))
        }
OPTIONAL, -- Cond InitialBWP-Only
        ra-ContentionResolutionTimer-r16             ENUMERATED {sf8, sf16,
sf24, sf32, sf40, sf48, sf56, sf64}      OPTIONAL, -- Cond 2StepOnly
        ...,
        [[
        ra-PrioritizationForSlicingTwoStep-r17          RA-PrioritizationForSlicing-
r17               OPTIONAL, -- Cond InitialBWP-Only
        featureCombinationPreamblesList-r17                        SEQUENCE
(SIZE(1..maxFeatureCombPreamblesPerRACHResource-r17))                    OF
FeatureCombinationPreambles-r17   OPTIONAL      --   Cond   AdditionalRACH-
AndRedCap
        ]]
}


GroupB-ConfiguredTwoStepRA-r16 ::=                    SEQUENCE {
        ra-MsgA-SizeGroupA                            ENUMERATED {b56,
b144, b208, b256, b282, b480, b640, b800,

                                                      b1000,        b72,
spare6, spare5, spare4, spare3, spare2, spare1},
        messagePowerOffsetGroupB                      ENUMERATED
{minusinfinity, dB0, dB5, dB8, dB10, dB12, dB15, dB18},
```

| | |
|---|---|
| numberOfRA-PreamblesGroupA | INTEGER (1..64) |
| } | |

The method according to an embodiment of the disclosure may separately allocate random access resources associated with the UAV UE to FeatureCombinationPreamble contained in the RACH-ConfigCommon IE and the RACH-ConfigCommonTwoStepRA IE. For example, a preamble exclusively used by the UAV UE may be configured. Specifically, information on FeatureCombinationPreamble may be as shown in Table 3 and Table 4 below.

[Table 3]

| |
|---|
| FeatureCombinationPreambles-r17 ::=    SEQUENCE {<br><br>    featureCombination-r17                      FeatureCombination-r17,<br><br>    startPreambleForThisPartition-r17       INTEGER (0..63),<br><br>    numberOfPreamblesPerSSB-ForThisPartition-r17 INTEGER (1..64),<br><br>    ssb-SharedRO-MaskIndex-r17                          INTEGER    (1..15)<br>OPTIONAL, -- Need S<br><br>    groupBconfigured-r17                    SEQUENCE {<br><br>        ra-SizeGroupA-r17                           ENUMERATED  {b56, b144, b208,<br>b256, b282, b480, b640,<br><br>                                                    b800,   b1000,   b72,   spare6,<br>spare5,spare4, spare3, spare2, spare1},<br><br>        messagePowerOffsetGroupB-r17            ENUMERATED { minusinfinity,<br>dB0, dB5, dB8, dB10, dB12, dB15, dB18},<br><br>        numberOfRA-PreamblesGroupA-r17          INTEGER (1..64)<br><br>    }<br>OPTIONAL, -- Need R<br><br>    separateMsgA-PUSCH-Config-r17                       MsgA-PUSCH-Config-r16<br>OPTIONAL, -- Cond MsgAConfigCommon<br><br>    msgA-RSRP-Threshold-r17                             RSRP-Range<br>OPTIONAL, -- Need R |

15

```
    rsrp-ThresholdSSB-r17                                      RSRP-Range
OPTIONAL, -- Need R
    deltaPreamble-r17                                       INTEGER   (-1..6)
OPTIONAL, -- Need R

    ...

}


FeatureCombination-r17 ::= SEQUENCE {
    redCap-r17                                        ENUMERATED    {true}
OPTIONAL,   -- Need R
    smallData-r17                                     ENUMERATED    {true}
OPTIONAL,   -- Need R
    nsag-r17                                                   NSAG-List-r17
OPTIONAL,   -- Need R
    msg3-Repetitions-r17                              ENUMERATED    {true}
OPTIONAL,   -- Need R
    UAV                                               ENUMERATED    {true}
OPTIONAL,   -- Need R
    spare3                                            ENUMERATED    {true}
OPTIONAL,   -- Need R
    spare2                                            ENUMERATED    {true}
OPTIONAL,   -- Need R
    spare1                                            ENUMERATED    {true}
OPTIONAL    -- Need R
}
```

[Table 4]

| **FeatureCombinationPreambles** field descriptions |
| --- |
| **deltaPreamble** <br> Power offset between msg3 or msgA-PUSCH and RACH preamble transmission. If configured, this parameter overrides *msg3-DeltaPreamble* or *msgA-DeltaPreamble,* Actual value = field value * 2 [dB] (see TS 38.213 [13], clause 7.1). If *msgA-DeltaPreamble* is configured in *separateMsgA-PUSCH-Config-r17*, this field is absent. |
| **featureCombination** |

(continued)

| *FeatureCombinationPreambles* field descriptions |
|---|
| Indicates which combination of features that the preambles indicated by this IE are associated with. The UE ignores a RACH resource defined by this *FeatureCombinationPreambles* if any feature within the *featureCombination* is not supported by the UE or if any of the spare fields within the *featureCombination* is set to *true.* |
| **messagePowerOffsetGroupB**<br>Threshold for preamble selection. Value is in dB. Value *minusinfinity* corresponds to - infinity. Value *dB0* corresponds to 0 dB, *dB5* corresponds to 5 dB and so on (see TS 38.321 [3], clause 5.1.2). |
| **msgA-RSRP-Threshold**<br>The UE selects 2-step random access type to perform random access based on this threshold (see TS 38.321 [3], clause 5.1.1). This field is only present if both 2-step and 4-step RA type are configured for the concerned feature combination in the BWP. If configured, this parameter overrides *msgA-RSRP-Threshold-r16.* If absent, the UE applies *msgA-RSRP-Threshold-r16,* if configured |
| **numberOfPreamblesPerSSB-ForThisPartition**<br>It determines how many consecutive preambles are associated to the Feature Combination starting from the starting preamble(s) per SSB. |
| **numberOfRA-PreamblesGroupA**<br>It determines how many consecutive preambles per SSB are associated to Group A starting from the starting preamble(s). The remaining preambles associated to the Feature Combination are associated to Group B |
| **ra-SizeGroupA**<br>Transport Blocks size threshold in bits below which the UE shall use a contention-based RA preamble of group A. (see TS 38.321 [3], clause 5.1.2). If this feature combination preambles are associated to a *RACH-ConfigCommon-twostepRA,* this field correspond to *ra-MsgA-SizeGroupA,* otherwise it corresponds to *ra-Msg3SizeGroupA.* |
| **rsrp-ThresholdSSB**<br>L1-RSRP threshold used for determining whether a candidate beam may be used by the UE. If this parameter is included in *FeatureCombinationPreambles* which is included in *RACH-ConfigCommonTwoStepRA,* it corresponds to *msgA-RSRP-ThresholdSSB,* as defined in TS 38.321 [3]. If this parameter is included in *FeatureCombinationPreambles* which is included in *RACH-ConfigCommon,* it it corresponds to *rsrp-ThresholdSSB,* as defined in TS 38.321 [3]. |
| **separateMsgA-PUSCH-Config**<br>If present it specifies how the 2-step RACH preambles identified by this *FeatureCombinationPreambles* are mapped to a PUSCH slot separate from the one defined in MsgA-ConfigCommon-r16. If the field is absent, the UE should apply the corresponding parameter in the *RACH-ConfigCommonTwoStepRA* of the BWP which includes the *FeatureCombinationPreambles IE.* |
| **ssb-SharedRO-MaskIndex**<br>Mask index (see TS 38.321 [3]).<br>Indicates a subset of ROs where preambles are allocated for this feature combination. If this field is configured within *FeatureCombinationPreambles* which is included in *RACH-ConfigCommonTwoStepRA,* it indicates a subset of ROs configured within this *RACH-ConfigCommonTwoStepRA.* This field is configured when there is more than one RO per SSB. If the field is absent, all ROs configured in *RACH-ConfigCommon* or *RACH-ConfigCommonTwoStepRA* containing this *FeatureCombinationPreambles* are shared. |
| **startPreambleForThisPartition**<br>It defines the first preamble associated with the Feature Combination. If the UE is provided with a number N of SSB block indexes associated with one PRACH occasion, and N<1, the first preamble in each PRACH occasion is the one having the same index as indicated by this field. If N>=1, N blocks of preambles associated with the Feature Combination are defined, each having start index $n \cdot N_{preamble}^{total}/N + startPreambleForThisPartition$ , where n refers to SSB block index (see TS 38.213 [13], clause 8.1). |

For reference, the above-mentioned description may also be applied to the ServingCellConfigCommon IE configured through a dedicated RRC message. For example, the operation of separately allocating random access resources associated with the UAV UE in FeatureCombinationPreamble may also be included in the ServingCellConfigCommon IE configured through a dedicated RRC message.

Additionally, priority values (featurePriorities) of features (e.g., RedCap, Slicing, and the like) may be configured in the SIB1 and the ServingCellConigCommon IE, and the features may be used by the UAV UE according to the priority values. The priority values are information indicating which feature among the features needs be configured to a high or low priority.

In operation 715, the UAV UE 701 may select a PRACH according to the embodiment described above for connection to the base station 703 and transmit a random access preamble on the corresponding PRACH. The UAV UE may apply FeatureCombinationPreamble described in operation 710.

In operation 721, the base station 703 may transmit a random access response message to the UAV UE 701. This may follow the embodiment described above.

In operation 731, the UAV UE 701 having received the RAR message transmits different messages for various purposes described above to the resources allocated to the RAR message. In FIG. 7, the preamble transmitted in operation 715 is referred to as Msg1, the RAR transmitted in operation 721 is referred to as Msg2, and the message transmitted in operation 731 is referred to as Msg3.

In the case of initial transmission, in operation 741, the UAV UE 701 may receive a contention resolution message from the base station 703. For example, in case that the base station identifier information previously assigned to the UE is not included in Msg3, the UAV UE 701 may receive a contention resolution message from the base station 703. This may follow the embodiment described above.

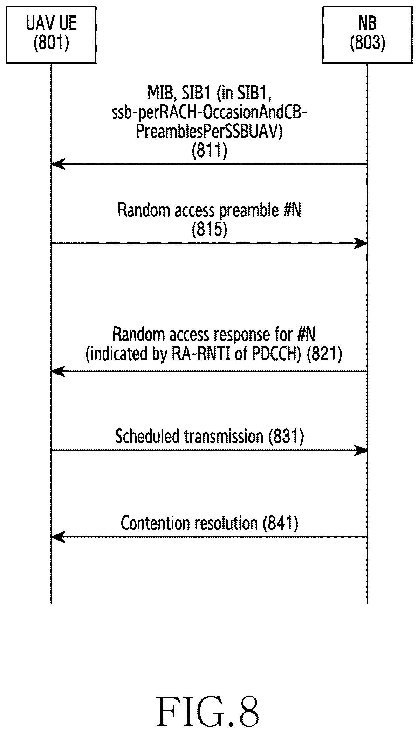

FIG. 8 is a diagram illustrating a method in which a base station transmits an SSB used by an uncrewed aerial vehicle (UAV) UE and a terrestrial UE for a PRACH occasion as a separate set, and accordingly the UAV UE performs a random access procedure with the base station in a wireless communication system according to an embodiment of the disclosure.

An existing NR system has been characterized in that SSBs are evenly distributed and transmitted for PRACH occasions. This is because the existing NR system has been installed and operated for terrestrial UEs. As flight UE technologies develop, the need for wireless communication services for flight UEs is increasing. Operators need to separately operate SSB sets used for terrestrial UEs and SSB sets used for flight UEs. Therefore, the disclosure proposes to separately define SSB sets for terrestrial UEs and SSB sets for flight UEs, and use PRACH resources accordingly. The method of an embodiment according to the disclosure may be used to support services such as UAV, urban air mobility (UAM), and air taxi/shuttle service.

Referring to FIG. 8, in operation 811, the UAV UE 801 may receive a master information block (MIB) and a system information block 1 (SIB1) from the base station 803. The SIB1 may include a RACH-ConfigCommon information element (IE) containing cell-specific random access parameters and a RACH-ConfigCommonTwoStepRA IE containing cell-specific 2-step random access type parameters. Specifically, the information contained in the RACH-ConfigCommon IE and the RACH-ConfigCommonTwoStepRA IE may be as shown in Tables 5 and 6 below.

[Table 5]

```
RACH-ConfigCommon ::=                    SEQUENCE {
    rach-ConfigGeneric                   RACH-ConfigGeneric,
    totalNumberOfRA-Preambles                            INTEGER    (1..63)
OPTIONAL,    -- Need S
    ssb-perRACH-OccasionAndCB-PreamblesPerSSB    CHOICE {
        oneEighth                                        ENUMERATED
{n4,n8,n12,n16,n20,n24,n28,n32,n36,n40,n44,n48,n52,n56,n60,n64},
        oneFourth                                        ENUMERATED
{n4,n8,n12,n16,n20,n24,n28,n32,n36,n40,n44,n48,n52,n56,n60,n64},
        oneHalf                                          ENUMERATED
{n4,n8,n12,n16,n20,n24,n28,n32,n36,n40,n44,n48,n52,n56,n60,n64},
        one                                              ENUMERATED
{n4,n8,n12,n16,n20,n24,n28,n32,n36,n40,n44,n48,n52,n56,n60,n64},
        two                                              ENUMERATED
{n4,n8,n12,n16,n20,n24,n28,n32},
        four                         INTEGER (1..16),
        eight                        INTEGER (1..8),
        sixteen                      INTEGER (1..4)
    }
OPTIONAL,    -- Need M

    groupBconfigured                     SEQUENCE {
        ra-Msg3SizeGroupA                    ENUMERATED  {b56, b144, b208,
b256, b282, b480, b640,
                                             b800,   b1000,   b72,   spare6,
spare5,spare4, spare3, spare2, spare1},
```

```
            messagePowerOffsetGroupB         ENUMERATED { minusinfinity, dB0,
dB5, dB8, dB10, dB12, dB15, dB18},
            numberOfRA-PreamblesGroupA       INTEGER (1..64)
    }
OPTIONAL,    -- Need R
    ra-ContentionResolutionTimer             ENUMERATED { sf8, sf16, sf24, sf32,
sf40, sf48, sf56, sf64},
    rsrp-ThresholdSSB                                                RSRP-Range
OPTIONAL,    -- Need R
    rsrp-ThresholdSSB-SUL                                            RSRP-Range
OPTIONAL,    -- Cond SUL
    prach-RootSequenceIndex                  CHOICE {
        l839                                 INTEGER (0..837),
        l139                                 INTEGER (0..137)
    },
    msg1-SubcarrierSpacing                                      SubcarrierSpacing
OPTIONAL,    -- Cond L139
    restrictedSetConfig                      ENUMERATED  {unrestrictedSet,
restrictedSetTypeA, restrictedSetTypeB},
    msg3-transformPrecoder                   ENUMERATED  {enabled}
OPTIONAL,    -- Need R
    ...,
    [[
    ra-PrioritizationForAccessIdentity-r16  SEQUENCE {
        ra-Prioritization-r16                RA-Prioritization,
        ra-PrioritizationForAI-r16           BIT STRING (SIZE (2))
    }
OPTIONAL,    -- Cond InitialBWP-Only
    prach-RootSequenceIndex-r16              CHOICE {
        l571                                 INTEGER (0..569),
        l1151                                INTEGER (0..1149)
```

```
}    OPTIONAL    -- Need R

]],

[[

ra-PrioritizationForSlicing-r17                    RA-PrioritizationForSlicing-r17

OPTIONAL,    -- Cond InitialBWP-Only

featureCombinationPreamblesList-r17                          SEQUENCE

(SIZE(1..maxFeatureCombPreamblesPerRACHResource-r17))              OF

FeatureCombinationPreambles-r17 OPTIONAL -- Cond AdditionalRACH-AndRedCap

]]

}
```

[Table 6]

```
RACH-ConfigCommonTwoStepRA-r16 ::=                SEQUENCE {

    rach-ConfigGenericTwoStepRA-r16                          RACH-
ConfigGenericTwoStepRA-r16,

    msgA-TotalNumberOfRA-Preambles-r16              INTEGER (1..63)
OPTIONAL, -- Need S

    msgA-SSB-PerRACH-OccasionAndCB-PreamblesPerSSB-r16    CHOICE {

        oneEighth                                    ENUMERATED
{n4,n8,n12,n16,n20,n24,n28,n32,n36,n40,n44,n48,n52,n56,n60,n64},

        oneFourth                                    ENUMERATED
{n4,n8,n12,n16,n20,n24,n28,n32,n36,n40,n44,n48,n52,n56,n60,n64},

        oneHalf                                      ENUMERATED
{n4,n8,n12,n16,n20,n24,n28,n32,n36,n40,n44,n48,n52,n56,n60,n64},

        one                                          ENUMERATED
{n4,n8,n12,n16,n20,n24,n28,n32,n36,n40,n44,n48,n52,n56,n60,n64},

        two                                          ENUMERATED
{n4,n8,n12,n16,n20,n24,n28,n32},

        four                                         INTEGER (1..16),

        eight                                        INTEGER (1..8),

        sixteen                                      INTEGER (1..4)
```

```
                }
OPTIONAL, -- Cond 2StepOnly
        msgA-CB-PreamblesPerSSB-PerSharedRO-r16                  INTEGER  (1..60)
OPTIONAL, -- Cond SharedRO
        msgA-SSB-SharedRO-MaskIndex-r16                          INTEGER  (1..15)
OPTIONAL, -- Need S
        groupB-ConfiguredTwoStepRA-r16                                    GroupB-
ConfiguredTwoStepRA-r16                                  OPTIONAL, -- Need S
        msgA-PRACH-RootSequenceIndex-r16                         CHOICE {
            l839                                                 INTEGER (0..837),
            l139                                                 INTEGER (0..137),
            l571                                                 INTEGER (0..569),
            l1151                                                INTEGER (0..1149)
        }
OPTIONAL, -- Cond 2StepOnly
        msgA-TransMax-r16                                        ENUMERATED {n1, n2,
n4, n6, n8, n10, n20, n50, n100, n200}       OPTIONAL, -- Need R
        msgA-RSRP-Threshold-r16                                          RSRP-Range
OPTIONAL, -- Cond 2Step4Step
        msgA-RSRP-ThresholdSSB-r16                                       RSRP-Range
OPTIONAL, -- Need R
        msgA-SubcarrierSpacing-r16                                   SubcarrierSpacing
OPTIONAL, -- Cond 2StepOnlyL139
        msgA-RestrictedSetConfig-r16                                    ENUMERATED
{unrestrictedSet, restrictedSetTypeA,

restrictedSetTypeB}                              OPTIONAL, -- Cond 2StepOnly
        ra-PrioritizationForAccessIdentityTwoStep-r16       SEQUENCE {
            ra-Prioritization-r16                                RA-Prioritization,
            ra-PrioritizationForAI-r16                           BIT STRING (SIZE (2))
```

```
                    }
OPTIONAL, -- Cond InitialBWP-Only
        ra-ContentionResolutionTimer-r16                    ENUMERATED {sf8, sf16,
sf24, sf32, sf40, sf48, sf56, sf64}       OPTIONAL, -- Cond 2StepOnly

        ...,

        [[
        ra-PrioritizationForSlicingTwoStep-r17              RA-PrioritizationForSlicing-
r17             OPTIONAL, -- Cond InitialBWP-Only
        featureCombinationPreamblesList-r17                        SEQUENCE
(SIZE(1..maxFeatureCombPreamblesPerRACHResource-r17))                    OF
FeatureCombinationPreambles-r17    OPTIONAL       --    Cond    AdditionalRACH-
AndRedCap
        ]]
}


GroupB-ConfiguredTwoStepRA-r16 ::=                 SEQUENCE {
        ra-MsgA-SizeGroupA                        ENUMERATED {b56,
b144, b208, b256, b282, b480, b640, b800,

                                                  b1000,        b72,
spare6, spare5, spare4, spare3, spare2, spare1},
        messagePowerOffsetGroupB                          ENUMERATED
{minusinfinity, dB0, dB5, dB8, dB10, dB12, dB15, dB18},
        numberOfRA-PreamblesGroupA                INTEGER (1..64)
}
```

The RACH-ConfigCommon IE and the RACH-ConfigCommonTwoStepRA IE according to an embodiment of the disclosure may separately include ssb-perRACH-OccasionAndCB-PreamblesPerSSBUAV. Accordingly, a UAV UE or a UAV UE flying at or above a specific altitude threshold may perform a random access procedure using ssb-perRACH-OccasionAndCB-PreamblesPerSSBUAV. The specific altitude threshold may be provided as system information. A terrestrial UE or a UAV UE flying at or below a specific altitude threshold may perform a random access procedure using previously defined ssb-perRACH-OccasionAndCB-PreamblesPerSSB.

Additionally, ssb-PositionInBurstUAV may be separately defined and included in the ServingCellConfigCommonSIB IE contained in the SIB1. Here, ssb-PositionInBurstUAV indicates a location where an SSB set is transmitted, and the SSB set may be used by a UAV UE or a UAV UE flying at or above a specific altitude threshold. Therefore, ssb-PositionInBurst included in the ServingCellConfigCommonSIB IE may indicate a location where an SSB set that may be used by a terrestrial UE or a UAV UE flying at or below a specific altitude threshold is transmitted. For reference, information included in the ServingCellConfigCommonSIB IE may be as shown in Table 7 and Table 8.

[Table 7]

```
         ServingCellConfigCommon ::=        SEQUENCE {
              physCellId                                    PhysCellId
         OPTIONAL,    -- Cond HOAndServCellAdd,
              downlinkConfigCommon                 DownlinkConfigCommon
         OPTIONAL,    -- Cond HOAndServCellAdd
              uplinkConfigCommon                     UplinkConfigCommon
         OPTIONAL,    -- Need M
              supplementaryUplinkConfig              UplinkConfigCommon
         OPTIONAL,    -- Need S
              n-TimingAdvanceOffset            ENUMERATED { n0, n25600,
         n39936 }                              OPTIONAL,    -- Need S
              ssb-PositionsInBurst            CHOICE {
                   shortBitmap                    BIT STRING (SIZE (4)),
                   mediumBitmap                   BIT STRING (SIZE (8)),
                   longBitmap                     BIT STRING (SIZE (64))
              }
```

```
         ssb-PositionsInBurstUAV             CHOICE {
              shortBitmap                     BIT STRING (SIZE (4)),
              mediumBitmap                    BIT STRING (SIZE (8)),
              longBitmap                      BIT STRING (SIZE (64))
```

[Table 8]

| **ServingCellConfigCommon field descriptions** |
|---|
| **ssb-PositionsInBurst/ssb-PositionInBurstUAV** |
| For operation in licensed spectrum, indicates the time domain positions of the transmitted SS-blocks in a half frame with SS/PBCH blocks as defined in TS 38.213 [13], clause 4.1. The first/leftmost bit corresponds to SS/PBCH block index 0, the second bit corresponds to SS/PBCH block index 1, and so on. Value 0 in the bitmap indicates that the corresponding SS/PBCH block is not transmitted while value 1 indicates that the corresponding SS/PBCH block is transmitted. The network configures the same pattern in this field as in the corresponding field in ServingCellConfigCommonSIB. |

(continued)

| ServingCellConfigCommon field descriptions |
| --- |
| For operation with shared spectrum channel access, the UE assumes that one or more SS/PBCH blocks indicated by ssb-PositionsInBurst may be transmitted within the discovery burst transmission window and have candidate SS/PBCH blocks indexes corresponding to SS/PBCH block indexes provided by ssb-PositionsInBurst (see TS 38.213 [13], clause 4.1). If the k-th bit of ssb-PositionsInBurst is set to 1, the UE assumes that one or more SS/PBCH blocks within the discovery burst transmission window with candidate SS/PBCH block indexes corresponding to SS/PBCH block index equal to k - 1 may be transmitted; if the kt-th bit is set to 0, the UE assumes that the corresponding SS/PBCH block(s) are not transmitted. The k-th bit is set to 0, where k > ssb-PositionQCL and the number of actually transmitted SS/PBCH blocks is not larger than the number of 1's in the bitmap. The network configures the same pattern in this field as in the corresponding field in ServingCellConfigCommonSIB. For operation with shared spectrum channel access in FR1, only mediumBitmap is used, and for FR2-2, longBitmap is used. |

Additionally, at least one of the following parameters may be broadcast separately in the system information for the UAV UE. That is, the range of each parameter may be different from the existing range or may be broadcast with a finer range according to characteristics of the UAV UE. For example, since the UAV UE may cause a lot of UL interference, powerRampingStep may be increased by a smaller step of 2dB.

- preambleTransMaxUAV: the maximum number of Random Access Preamble transmission;
- powerRampingStepUAV: the power-ramping factor;
- preambleReceivedTargetPowerUAV: initial Random Access Preamble power for 4-step RA type;
- msgA-PreambleReceivedTargetPowerUAV: initial Random Access Preamble power for 2-step RA type;
- prach-ConfigurationIndexUAV: the available set of PRACH occasions for the transmission of the Random Access Preamble for Msg1. These are also applicable to the MSGA PRACH if the PRACH occasions are shared between 2-step and 4-step RA types;
- msgA-PRACH-ConfigurationIndexUAV: the available set of PRACH occasions for the transmission of the Random Access Preamble for MSGA in 2-step RA type;
- msgA-TransMaxUAV: The maximum number of MSGA transmissions when both 4-step and 2-step RA type Random Access Resources are configured;
- msgA-PreamblePowerRampingStepUAV: the power ramping factor for MSGA preamble;

The above-mentioned description may also be applied to the ServingCellConfigCommon IE configured through a dedicated RRC message.

In operation 815, the UAV UE 801 may transmit a random access preamble to the PRACH selected according to the embodiment described above for connection to the base station 803. The above-described embodiment may be applied or the contents described above may be applied.

In operation 821, the base station 803 may transmit a random access response message to the UAV UE 801. This may follow the embodiment described above.

In operation 831, the UAV UE 801 having received the RAR message may transmit different messages for various purposes described above to the resources allocated to the RAR message. The message transmitted in operation 831 in FIG. 8 is referred to as Msg3 (i.e., the preamble in operation 815 is also referred to as Msg1, and the RAR in operation 821 is also referred to as Msg2). The above-described embodiment may be applied or the contents described above may be applied.

Thereafter, in operation 841, in the case of initial transmission, the UAV UE 801 may receive a contention resolution message from the base station 803. For example, in case that the base station identifier information previously assigned to the UE is not included in Msg3, the UAV UE 801 may receive a contention resolution message from the base station 803. The above-described embodiment may be applied or the contents described above may be applied.

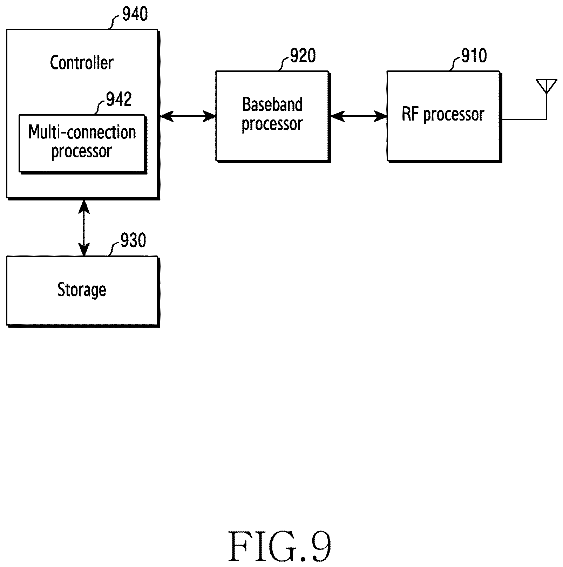

FIG. 9 is a block diagram illustrating an internal structure of a UE according to an embodiment of the disclosure.

Referring to FIG. 9, the UE may include a radio frequency (RF) processor 910, a baseband processor 920, a storage 930, and a controller 940.

The RF processor 910 may perform functions for transmitting and receiving a signal via a wireless channel, such as band conversion and amplification of the signal. That is, the RF processor 910 may up-convert a baseband signal provided from the baseband processor 920 into an RF band signal, and transmit the same through an antenna. The RF processor 910 may down-convert an RF band signal received through the antenna into a baseband signal. For example, the RF processor 910 may include a transmission filter, a reception filter, an amplifier, a mixer, an oscillator, a digital-to-analog converter (DAC), an analog-to-digital converter (ADC), and the like.

The UE according to an embodiment may have a single antenna as in FIG. 9, or may have multiple antennas. In addition, the RF processor 910 may include multiple RF chains. Furthermore, the RF processor 910 may perform beamforming. For the beamforming, the RF processor 910 may adjust the phase and magnitude of each of signals transmitted and received through multiple antennas or antenna elements. In addition, the RF processor may perform MIMO, and may receive multiple layers when performing a MIMO operation.

The baseband processor 920 may perform functions of conversion between baseband signals and bitstrings according to the system's physical layer specifications. For example, during data transmission, the baseband processor 920 may encode and modulate a transmitted bitstring to generate complex symbols.

In addition, during data reception, the baseband processor 920 may demodulate and decode a baseband signal provided from the RF processor 910 to restore a received bitstring. For example, when following the orthogonal frequency division multiplexing (OFDM) scheme, during data transmission, the baseband processor 920 may encode and modulate a transmitted bitstring to generate complex symbols, may map the complex symbols to subcarriers, and may configure OFDM symbols through an inverse fast Fourier transform (IFFT) operation and cyclic prefix (CP) insertion.

In addition, during data reception, the baseband processor 920 may split a baseband signal provided from the RF processor 910 at the OFDM symbol level, may restore signals mapped to subcarriers through a fast Fourier transform (FFT) operation, and may restore a received bitstring through demodulation and decoding.

The baseband processor 920 and the RF processor 910 may transmit and receive signals as described above. Therefore, the baseband processor 920 and the RF processor 910 may be referred to as a transmitter, a receiver, a transceiver, or a communication unit. Furthermore, at least one of the baseband processor 920 and the RF processor 910 may include multiple communication modules to support multiple different radio access technologies. In addition, at least one of the baseband processor 920 and the RF processor 910 may include different communication modules to process signals in different frequency bands. For example, the different radio access technologies may include a wireless LAN (e.g., IEEE 802.11), a cellular network (e.g., LTE), and the like. In addition, the different frequency bands may include super high frequency (SHF) (e.g., 2NRHz) bands and millimeter wave (mmWave) (e.g., 60GHz) bands.

The storage 930 may store basic programs, application programs, and data, such as configuration information, for operation of the main base station. Particularly, the storage 930 may store information regarding a second access node configured to perform wireless communication by using a second radio access technology. In addition, the storage unit 930 may provide data stored therein at the request of the controller 940.

The controller 940 may control the overall operation of the UE. For example, the controller 940 may transmit/receive signals through the baseband processor 920 and the RF processor 910. In addition, the controller940 records data in the storage 930 and reads the data from the storage 930. To this end, the controller 940 may include at least one processor. For example, the controller 940 may include a communication processor (CP) configured to perform control for communication, and an application processor (AP) configured to control upper layers such as application programs. In addition, the controller 940 may further include a multi-connection processor 942 to support multiple connections.

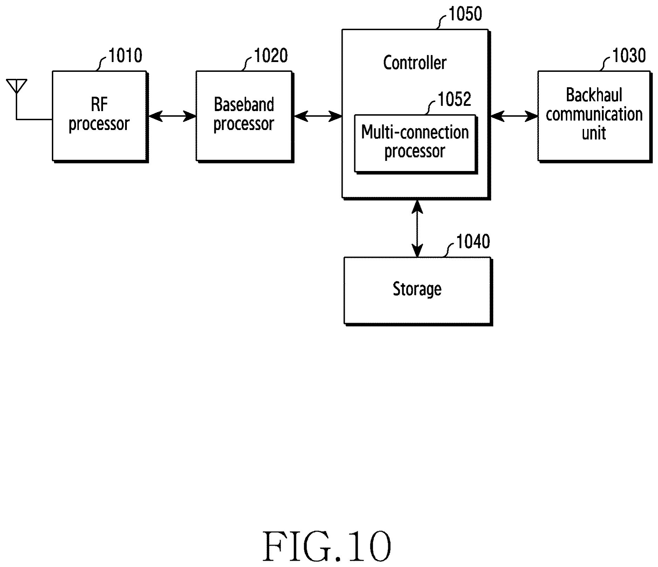

FIG. 10 is a block diagram illustrating a structure of an NR base station according to an embodiment of the disclosure.

As illustrated in the drawing, the base station may include an RF processor 1010, a baseband processor 1020, a backhaul communication unit 1030, a storage 1040, and a controller 1050.

The RF processor 1010 may perform a function for transmitting and receiving a signal via a wireless channel, such as band conversion and amplification of the signal. That is, the RF processor 1010 may up-convert a baseband signal provided from the baseband processor 1020 to an RF band signal, may transmit the same through an antenna, and may down-convert an RF band signal received through the antenna to a baseband signal. For example, the RF processor 1010 may include a transmission filter, a reception filter, an amplifier, a mixer, an oscillator, a DAC, and an ADC. Although only one antenna is illustrated in the drawing, the first access node may include multiple antennas. In addition, the RF processor 1010 may include multiple RF chains. Furthermore, the RF processor 1010 may perform beamforming. For the beamforming, the RF processor 1010 may adjust the phase and magnitude of each of signals transmitted and received through multiple antennas or antenna elements. The RF processor may transmit one or more layers to perform a downward MIMO operation.

The baseband processor 1020 may perform functions of conversion between baseband signals and bitstrings according to the physical layer specifications of a first radio access technology. For example, in case of data transmission, the baseband processor 1020 may encode and modulate a transmitted bitstring to generate complex symbols. In addition, in case of data reception, the baseband processor 1020 may demodulate and decode a baseband signal provided from the RF processor 1010 to restore a received bitstring. For example, when following the OFDM scheme, during data transmission, the baseband processor 1020 may encode and modulate a transmitted bitstring to generate complex symbols, may map the complex symbols to subcarriers, and may configure OFDM symbols through IFFT operation and CP insertion. In addition, in case of data reception, the baseband processor 1020 may split a baseband signal provided from the RF processor 1010 at the OFDM symbol level, may restore signals mapped to subcarriers through FFT operation, and may restore a received bitstring through demodulation and decoding. The baseband processor 1020 and the RF processor 1010 may transmit and receive signals as described above. Therefore, the baseband processor 1020 and the RF processor 1010 may be referred to as a transmitter, a receiver, a transceiver, a communication unit, or a wireless communication unit.

The backhaul communication unit 1030 provides an interface for performing communication with other nodes in the network. That is, the backhaul communication unit 1030 may convert bitstrings transmitted from the main base station to other nodes (for example, auxiliary base station, core network) to physical signals, and may convert physical signals received from the other nodes to bitstrings.

The storage 1040 may store basic programs, application programs, and data, such as configuration information, for operation of the main base station. Particularly, the storage 1040 may store information regarding a bearer allocated to a connected UE, a measurement result reported from the connected UE, and the like. In addition, the storage 1040 may store information serving as a reference to determine whether to provide multi-connection to a UE or to suspend the same. In addition, the storage 1040 provides the stored data at the request of the controller 1050.

The controller 1050 controls the overall operation of the base station. For example, the controller 1050 may transmit/receive signals through the baseband processor 1020 and the RF processor 1010 or through the backhaul communication unit 1030. In addition, the controller1050 records data in the storage 1040 and reads the data from the storage 1040. To this end, the controller 1050 may include at least one processor. The controller 1050 may further include a multi-connection processor 1052 to support multiple connections.

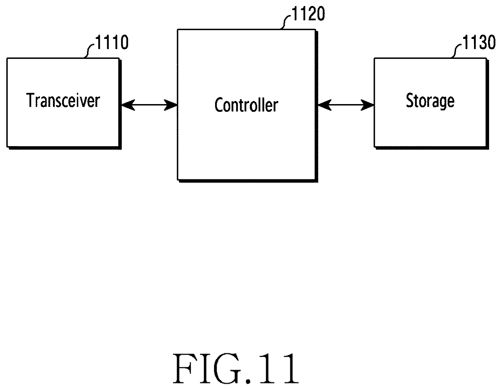

FIG. 11 illustrates a structure of a base station according to various embodiments of the disclosure.

Referring to FIG. 11, the base station may include a transceiver 1110, a controller 1120, and a storage 1130. The transceiver 1110, the controller 1120, and the storage 1130 may be operated according to the above-described communication methods of the base station. A network device may also correspond to the structure of the base station. However, components of the base station are not limited to the above-described example. For example, the base station may include a larger or smaller number of components than the above-described components. For example, the base station may include the transceiver 1110 and the controller 1120. Furthermore, the transceiver 1110, the controller 1120, and the storage 1130 may be implemented in the form of a single chip.

The transceiver 1110 refers to a base station receiver and a base station transmitter as a whole, and may transmit/receive signals with UEs, other base stations, and other network devices. The transmitted/received signals may include control information and data. The transceiver 1110 may transmit, for example, system information, synchronization signals, or reference signals to UEs. To this end, the transceiver 1110 may include an RF transmitter configured to up-convert and amplify the frequency of transmitted signals, an RF receiver configured to low-noise-amplify received signals and down-convert the frequency thereof, and the like. However, this is only an embodiment of the transceiver 1110, and the components of the transceiver 1110 are not limited to the RF transmitter and the RF receiver. The transceiver 1110 may include wired/wireless transceivers, and may include various components for transmitting/receiving signals. In addition, the transceiver 1110 may receive signals through a communication channel (e.g., a radio channel), output the same to the controller 1120, and transmit signals output from the controller 1120 through the communication channel. Furthermore, the transceiver 1110 may receive communication signals, output same to a processor, and transmit signals output from the processor to UEs, other base stations, or other network entities through a wired/wireless network.

The storage 1130 may store programs and data necessary for operations of the base station. In addition, the storage 1130 may store control information or data included in signals acquired by the base station. The memory 1130 may include storage media such as a ROM, a RAM, a hard disk, a CD-ROM, and a DVD, or a combination of storage media. In addition, the storage 1130 may store at least one of information transmitted/received through the transceiver 1110 and information generated through the controller 1120.

As used herein, the controller 1120 may be defined as a circuit, an application specific integrated circuit, or at least one processor. The processor may include a communication processor (CP) which performs control for communication and an application processor (AP) which controls upper layers such as application programs. The controller 1120 may control the overall operation of the base station according to the embodiments proposed in the disclosure. For example, the controller 1120 may control signal flows between the respective blocks to perform operations according to the above-described flowcharts.

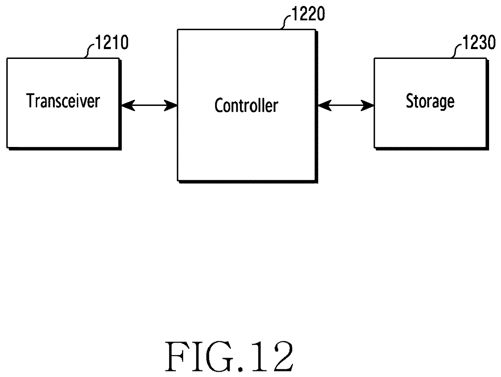

FIG. 12 illustrates a structure of a UE according to various embodiments of the disclosure.

Referring to FIG. 12, the UE may include a transceiver 1210, a controller 1220, and a storage 1230. The transceiver 1210, the controller 1220, and the storage 1230 may be operated according to the above-described communication methods of the UE. However, components of the UE are not limited to the above-described example. For example, the UE may include a larger or smaller number of components than the above-described components. For example, the UE may include the transceiver 1210 and the controller 1220. Furthermore, the transceiver 1210, the controller 1220, and the storage 1230 may be implemented in the form of a single chip.

The transceiver 1210 refers to a UE receiver and a UE transmitter as a whole, and may transmit/receive signals with base stations, other UEs, and other network entities. The signals transmitted/received with the base stations may include control information and data. The transceiver 1210 may receive, for example, system information, synchronization signals, or reference signals from the base station. To this end, the transceiver 1210 may include an RF transmitter configured to up-convert and amplify the frequency of transmitted signals, an RF receiver configured to low-noise-amplify received signals and down-convert the frequency thereof, and the like. However, this is only an embodiment of the transceiver 1210, and the components of the transceiver 1210 are not limited to the RF transmitter and the RF receiver. Also, the transceiver 1210 may include wired/wireless transceivers, and may include various components for transmitting/receiving signals. In addition, the transceiver 1210 may receive signals through a radio channel, output the same to the controller 1220, and transmit signals output from the controller 1220 through the radio channel. Furthermore, the transceiver 1210 may receive communication signals, output same to a processor, and transmit signals output from the processor to a network entity through a wired/wireless network.

The storage 1230 may store programs and data necessary for operations of the UE. In addition, the storage 1230 may store control information or data included in signals acquired by the UE. The storage 1230 may include storage media such as a ROM, a RAM, a hard disk, a CD-ROM, and a DVD, or a combination of storage media.

As used herein, the controller 1220 may be defined as a circuit, an application specific integrated circuit, or at least one processor. The processor may include a communication processor (CP) which performs control for communication and an application processor (AP) which controls upper layers such as application programs. The controller 1220 may control the overall operation of the UE according to the embodiments proposed in the disclosure. For example, the controller 1220 may control signal flows between the respective blocks to perform operations according to the above-described flowcharts.

Methods disclosed in the claims and/or methods according to the embodiments described in the specification of the disclosure may be implemented by hardware, software, or a combination of hardware and software.

When the methods are implemented by software, a computer-readable storage medium for storing one or more programs (software modules) may be provided. The one or more programs stored in the computer-readable storage medium may be configured for execution by one or more processors within the electronic device. The at least one program includes instructions that cause the electronic device to perform the methods according to various embodiments of the disclosure as defined by the appended claims and/or disclosed herein.

These programs (software modules or software) may be stored in non-volatile memories including a random access memory and a flash memory, a read only memory (ROM), an electrically erasable programmable read only memory (EEPROM), a magnetic disc storage device, a compact disc-ROM (CD-ROM), digital versatile discs (DVDs), or other type optical storage devices, or a magnetic cassette. Alternatively, any combination of some or all of them may form a memory in which the program is stored. In addition, a plurality of such memories may be included in the electronic device.

Furthermore, the programs may be stored in an attachable storage device which can access the electronic device through communication networks such as the Internet, Intranet, Local Area Network (LAN), Wide LAN (WLAN), and Storage Area Network (SAN) or a combination thereof. Such a storage device may access the electronic device via an external port. Also, a separate storage device on the communication network may access a portable electronic device.

In the above-described detailed embodiments of the disclosure, an element included in the disclosure is expressed in the singular or the plural according to presented detailed embodiments. However, the singular form or plural form is selected appropriately to the presented situation for the convenience of description, and the disclosure is not limited by elements expressed in the singular or the plural. Therefore, either an element expressed in the plural may also include a single element or an element expressed in the singular may also include multiple elements.

Although specific embodiments have been described in the detailed description of the disclosure, it will be apparent that various modifications and changes may be made thereto without departing from the scope of the disclosure. Therefore, the scope of the disclosure should not be defined as being limited to the embodiments set forth herein, but should be defined by the appended claims and equivalents thereof.

**Claims**

1. An uncrewed aerial vehicle (UAV) terminal in a wireless communication system, the UAV terminal comprising:

   a transceiver; and
   a controller coupled to the transceiver,
   wherein the controller is configured to:

   receive, from a base station via an uptilted beam, a synchronization signal (SS) block (SSB)/physical broadcast channel (PBCH) block including a master information block (MIB) and associated with the UAV terminal; and
   transmit, to the base station, a random access preamble based on the SSB.

2. The UAV terminal of claim 1, wherein the random access preamble is transmitted on a physical random access channel (PRACH) occasion,

wherein the PRACH occasion is determined based on system information block type 1 (SIB1), and
wherein the SIB1 includes information on a first SSB set associated with the UAV terminal and information on a second SSB set associated with a terminal flying at a predetermined altitude or below.

3. The UAV terminal of claim 2, wherein the SIB1 includes ssb-PositionInBurstUAV information indicating a time domain position in which the first SSB set is transmitted and ssb-PositionInBurst information indicating a time domain position in which the second SSB set is transmitted.

4. The UAV terminal of claim 1, wherein the system information block type 1 (SIB1) received from the base station includes information on FeatureCombinationPreamble including a feature associated with the UAV terminal, and wherein the random access preamble is determined based on the FeatureCombinationPreamble.

5. The UAV terminal of claim 1, wherein the controller is further configured to:

receive a random access response (RAR) to the random access preamble from the base station; and
based on the RAR, transmit message 3 including a logical channel identity (LCID) value associated with the UAV terminal to the base station.

6. A base station in a wireless communication system, the base station comprising:

a transceiver; and
a controller coupled to the transceiver,
wherein the controller is configured to:

transmit, to an uncrewed aerial vehicle (UAV) terminal via an uptilted beam, a synchronization signal (SS) block (SSB)/physical broadcast channel (PBCH) block including a master information block (MIB) and associated with the UAV terminal; and
receive, from the UAV terminal, a random access preamble based on the SSB.

7. The base station of claim 6, wherein the random access preamble is transmitted on a physical random access channel (PRACH) occasion,

wherein the PRACH occasion is determined based on system information block type 1 (SIB1), and
wherein the SIB1 includes information on a first SSB set associated with the UAV terminal and information on a second SSB set associated with a terminal flying at a predetermined altitude or below.

8. The base station of claim 7, wherein the SIB1 includes ssb-PositionInBurstUAV information indicating a time domain position in which the first SSB set is transmitted and ssb-PositionInBurst information indicating a time domain position in which the second SSB set is transmitted.

9. The base station of claim 6, wherein the system information block type 1 (SIB1) received from the base station includes information on FeatureCombinationPreamble including a feature associated with the UAV terminal, and wherein the random access preamble is determined based on the FeatureCombinationPreamble.

10. The base station of claim 6, wherein the controller is further configured to:

transmit, to the UAV terminal, a random access response (RAR) to the random access preamble; and
receive, from the UAV terminal, message 3 including a logical channel identity (LCID) value associated with the UAV terminal based on the RAR.

11. A method performed by an uncrewed aerial vehicle (UAV) terminal in a wireless communication system, the method comprising:

receiving, from a base station via an uptilted beam, a synchronization signal (SS) block (SSB)/physical broadcast channel (PBCH) block including a master information block (MIB) and associated with the UAV terminal; and
transmitting, to the base station, a random access preamble based on the SSB.

12. The method of claim 11, wherein the random access preamble is transmitted on a physical random access channel (PRACH) occasion,

wherein the PRACH occasion is determined based on system information block type 1 (SIB1), and
wherein the SIB1 includes information on a first SSB set associated with the UAV terminal and information on a second SSB set associated with a terminal flying at a predetermined altitude or below.

13. The method of claim 12, wherein the SIB1 includes ssb-PositionInBurstUAV information indicating a time domain position in which the first SSB set is transmitted and ssb-PositionInBurst information indicating a time domain position in which the second SSB set is transmitted.

14. A method performed by a base station in a wireless communication system, the method comprising:

transmitting, to an uncrewed aerial vehicle (UAV) terminal via an uptilted beam, a synchronization signal (SS) block (SSB)/physical broadcast channel (PBCH) block including a master information block (MIB) and associated with the UAV terminal flying at above a predetermined altitude; and
receiving, from the UAV terminal, a random access preamble based on the SSB.

15. The method of claim 14, wherein the random access preamble is transmitted on a physical random access channel (PRACH) occasion,

wherein the PRACH occasion is determined based on system information block type 1 (SIB1), and
wherein the SIB1 includes information on a first SSB set associated with the UAV terminal and information on a second SSB set associated with a terminal flying at a predetermined altitude or below.

# FIG.1

| UE | | eNB/gNB | |
|---|---|---|---|
| PDCP | (205) | PDCP | (240) |
| RLC | (210) | RLC | (235) |
| MAC | (215) | MAC | (230) |
| PHY | (220) | PHY | (225) |

# FIG.2

FIG.3

EP 4 651 616 A1

```
        UE                                              NB
       (401)                                          (403)

                    Random access preamble #N
                            (411)
         |─────────────────────────────────────────────▶|
         |                                               |
 RAR     |         Random access response for #N         |
Window   |   (Indicated by RA-RNTI of PDCCH) (421)        |
 (423)   |◀─────────────────────────────────────────────|
         |                                               |
         |          Scheduled transmission (431)         |
         |─────────────────────────────────────────────▶|
         |                                               |
         |           Contention resolution (441)          |
         |◀─────────────────────────────────────────────|
```

FIG.4

FIG.5

FIG.6

FIG.7

FIG.8

FIG.9

FIG.10

FIG.11

Transceiver 1210

Controller 1220

Storage 1230

FIG.12

## INTERNATIONAL SEARCH REPORT

| International application No. |
|---|
| **PCT/KR2024/095066** |

| A. | CLASSIFICATION OF SUBJECT MATTER |
|---|---|

**H04W 74/08**(2009.01)i; **H04W 74/04**(2009.01)i; **H04W 74/00**(2009.01)i; **B64C 39/02**(2006.01)i; **H04W 84/06**(2009.01)i; **B64U 101/00**(2023.01)i

According to International Patent Classification (IPC) or to both national classification and IPC

| B. | FIELDS SEARCHED |
|---|---|

Minimum documentation searched (classification system followed by classification symbols)

H04W 74/08(2009.01); B64C 39/02(2006.01); H04W 48/10(2009.01); H04W 56/00(2009.01); H04W 84/06(2009.01); H04W 88/02(2009.01)

Documentation searched other than minimum documentation to the extent that such documents are included in the fields searched

Korean utility models and applications for utility models: IPC as above
Japanese utility models and applications for utility models: IPC as above

Electronic data base consulted during the international search (name of data base and, where practicable, search terms used)

eKOMPASS (KIPO internal) & keywords: 무인 항공기(UAV), 랜덤 액세스 프리앰블(random access preamble), 업틸팅 빔 (uptilting beam), MIB(master information block), PRACH(physical random access channel) occasion

| C. | DOCUMENTS CONSIDERED TO BE RELEVANT |
|---|---|

| Category* | Citation of document, with indication, where appropriate, of the relevant passages | Relevant to claim No. |
|---|---|---|
| Y | KR 10-2022-0084704 A (SAMSUNG ELECTRONICS CO., LTD.) 21 June 2022 (2022-06-21) <br> See paragraphs [0032], [0066], [0095], [0098] and [0154]; and claims 11-12. | 1-15 |
| Y | JP 2020-072417 A (SOFTBANK CORP.) 07 May 2020 (2020-05-07) <br> See paragraphs [0007], [0035] and [0041]. | 1-15 |
| Y | WO 2023-014761 A1 (IDAC HOLDINGS, INC.) 09 February 2023 (2023-02-09) <br> See claim 1. | 4,9 |
| Y | JP 2020-535717 A (KYOCERA CORP.) 03 December 2020 (2020-12-03) <br> See paragraphs [0050], [0053] and [0058]. | 5,10 |
| A | KR 10-2021-0124243 A (QUALCOMM INCORPORATED) 14 October 2021 (2021-10-14) <br> See claim 1. | 1-15 |

☐ Further documents are listed in the continuation of Box C.　　☑ See patent family annex.

| | | | |
|---|---|---|---|
| * | Special categories of cited documents: | "T" | later document published after the international filing date or priority date and not in conflict with the application but cited to understand the principle or theory underlying the invention |
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| **13 May 2024** | **13 May 2024** |

| Name and mailing address of the ISA/KR | Authorized officer |
|---|---|
| **Korean Intellectual Property Office** <br> **Government Complex-Daejeon Building 4, 189 Cheongsa-ro, Seo-gu, Daejeon 35208** | |
| Facsimile No. **+82-42-481-8578** | Telephone No. |

Form PCT/ISA/210 (second sheet) (July 2022)

**INTERNATIONAL SEARCH REPORT**
Information on patent family members

International application No.

**PCT/KR2024/095066**

| Patent document cited in search report | | | Publication date (day/month/year) | Patent family member(s) | | | Publication date (day/month/year) |
|---|---|---|---|---|---|---|---|
| KR | 10-2022-0084704 | A | 21 June 2022 | US | 2023-0422310 | A1 | 28 December 2023 |
| | | | | WO | 2022-131645 | A1 | 23 June 2022 |
| JP | 2020-072417 | A | 07 May 2020 | | None | | |
| WO | 2023-014761 | A1 | 09 February 2023 | KR | 10-2024-0038089 | A | 22 March 2024 |
| JP | 2020-535717 | A | 03 December 2020 | JP | 7037645 | B2 | 16 March 2022 |
| | | | | US | 11508245 | B2 | 22 November 2022 |
| | | | | US | 11798425 | B2 | 24 October 2023 |
| | | | | US | 2021-0074166 | A1 | 11 March 2021 |
| | | | | US | 2023-0036593 | A1 | 02 February 2023 |
| | | | | WO | 2019-067277 | A1 | 04 April 2019 |
| KR | 10-2021-0124243 | A | 14 October 2021 | CN | 113412677 | A | 17 September 2021 |
| | | | | EP | 3925387 | A1 | 22 December 2021 |
| | | | | EP | 4048018 | A1 | 24 August 2022 |
| | | | | SG | 11202107627 | A | 30 August 2021 |
| | | | | TW | 202041086 | A | 01 November 2020 |
| | | | | TW | I824108 | B | 01 December 2023 |
| | | | | US | 2020-0288506 | A1 | 10 September 2020 |
| | | | | WO | 2020-168285 | A1 | 20 August 2020 |
| | | | | WO | 2020-168285 | A9 | 15 April 2021 |

Form PCT/ISA/210 (patent family annex) (July 2022)